# EUROPÄISCHE PATENTSCHRIFT

(11) **EP 4 243 293 B1**
(45) Veröffentlichungstag und Bekanntmachung des Hinweises auf die Patenterteilung: **21.05.2025**
(21) Anmeldenummer: 22160537.1
(22) Anmeldetag: 07.03.2022
(51) Int. Cl.: H04B 5/00, A47J 43/07

(54) **ZUBEHÖRTEIL FÜR EIN KÜCHENGERÄT**
ACCESSORY FOR A KITCHEN APPLIANCE
ACCESSOIRES POUR UN ROBOT DE CUISINE

(43) Veröffentlichungstag der Anmeldung: 13.09.2023
(73) Patentinhaber: Vorwerk & Co. Interholding GmbH, 42275 Wuppertal (DE)
(72) Erfinder: Beckmann, Nils, 42853 Remscheid (DE)
(74) Vertreter: Cohausz & Florack

(56) Entgegenhaltungen:
- WO-A2-2010/052631
- AU-A1- 2020 245 708
- AU-A4- 2021 105 122
- CN-U- 206 496 384
- US-A1- 2011 301 903
- US-A1- 2014 203 010
- US-A1- 2017 228 626
- US-A1- 2018 255 975

## Beschreibung

Die Anmeldung betrifft ein Zubehörteil für ein Küchengerät. Darüber hinaus betrifft die Anmeldung ein Küchengerät und ein Verfahren.

Aus dem Stand der Technik sind Küchengeräte beispielsweise in Form von Küchenmaschinen bekannt, die zum zumindest teilautomatischen Zubereiten von Speisen eingerichtet sind. Derartige Küchenmaschinen, aber auch andere Küchengeräte, können mindestens ein Zubehörteil umfassen, beispielsweise einen Topf und/oder einen Deckel einer Gefäßanordnung. Beispielhafte und nicht abschließende Zubehörteile sind insbesondere Varoma, Rühraufsatz, Messerabdeckung, Messbecher, Deckel, Topf, Garkörbchen und/oder dergleichen. Ein Zubehörteil ist mit dem Küchengerät, insbesondere der Gerätebasis des Küchengeräts, koppelbar bzw. verbindbar.

Aus der EP 3 285 627 B1 ist ein Küchengerät in Form eines Mischsystems bekannt, bei dem ein mit einer Gerätebasis gekoppeltes Zubehörteil mit Hilfe von RFID (Radiofrequency Identification) identifiziert wird. Hierzu ist in der EP 3 285 627 B1 in dem Zubehörteil ein passiver RFID Transponder mit einer auslesbaren Zubehörkennung und in der Gerätebasis eine RFID Leseanordnung zum Auslesen des RFID Transponders (beispielsweise ein NFC (Nearfield Communication) Transponder) vorgesehen. Die US 2018 255975 A1 und US 2014 203010A1 offenbaren weitere Küchengeräte des Stands der Technik.

Nachteilig an dem Stand der Technik ist, dass die Identifizierung des Zubehörteils erfolgen kann, ohne dass sichergestellt ist, dass das Zubehörteil ordnungsgemäß bzw. korrekt an dem Küchengerät, insbesondere der Gerätebasis, positioniert ist. So wird der RFID-Transponder unabhängig von der Betriebsposition des Zubehörteils stets dann ausgelesen, wenn sich der RFID-Transponder in Reichweite der RFID-Leseanordnung befindet. Für einen sicheren Betrieb des Küchengeräts sollte eine Küchengerätefunktion jedoch erst dann freigegeben werden, wenn das Zubehörteil ordnungsgemäß mit der Gerätebasis und/oder einem weiteren Zubehörteil gekoppelt wurde bzw. korrekt positioniert wurde. Insbesondere kann es bei einer nicht korrekten Positionierung zu einer Beschädigung des Küchengeräts und/oder des Zubehörteils kommen.

Daher liegt der Anmeldung die Aufgabe zugrunde, eine Möglichkeit zu schaffen, mit der ein Küchengerät in sicherer Weise betrieben und insbesondere Beschädigungen des Küchengeräts und/oder des Zubehörteils reduziert werden können.

Diese Aufgabe wird gemäß einem ersten Aspekt der Anmeldung gelöst durch ein Küchengerät nach Anspruch 1.

Das Zubehörteil ist mit einer auslesbaren Transponderanordnung ausgestattet, wobei die Transponderanordnung einen mit einem Transponder verbundenen Zubehörlagesensor umfasst, der mindestens einen Zubehörlageparameter erfasst, ist bei einem Küchengerät eine korrekte Positionierung des Zubehörteils detektierbar. Hierdurch kann die Betriebssicherheit des Küchengeräts verbessert werden. Beschädigungen an dem Küchengerät und/oder des Zubehörteils aufgrund einer unsachgemäßen Positionierung des Zubehörteils an dem Küchengerät können reduziert werden.

Das anmeldungsgemäße Zubehörteil ist für eine Verwendung in einem Küchengerät eingerichtet. Das Küchengerät ist insbesondere eine Küchenmaschine, eingerichtet zum Zubereiten von Speisen. Das Zubereiten kann zumindest teilweise automatisiert erfolgen. Vorzugsweise kann das Küchengerät zum zumindest teilweisen automatisierten Zubereiten von Kaltspeisen und Warmspeisen eingerichtet sein.

Das mindestens eine anmeldungsgemäße Zubehörteil kann vorzugsweise ein Zubehörteil sein aus der Gruppe, umfassend
- Messerabdeckung,
- Rühraufsatz,
- Deckel,
- Deckel mit Zusatzfunktion, z.B. Schneideinrichtung für Gemüse
- Topf,
- Messbecher,
- Garkörbchen, und/oder
- Varoma.

Vorzugsweise kann ein Küchengerät eine Gefäßanordnung umfassen. Die Gefäßanordnung kann mindestens einen Topf und mindestens einen ersten zu dem Topf strukturell korrespondierenden Deckel umfassen. Dies meint insbesondere, dass eine (Topf-)Öffnung durch den ersten Deckel verschließbar bzw. abdeckbar ist und der Deckel insbesondere auf die Topföffnung auflegbar ist.

Unter einem Topf, auch Kochtopf genannt, ist anmeldungsgemäß insbesondere ein füllbares Gefäß bzw. ein füllbarer Behälter zu verstehen, welches/r zum Zubereiten von Speisen eingerichtet ist, insbesondere zum Garen oder Kochen von Warmspeisen. Vorzugsweise korrespondiert der Topf (strukturell) zu einer Gerätebasis des Küchengeräts.

Ein Zubehörteil kann beispielswiese zumindest teilweise aus Kunststoff, zumindest teilweise aus Metall und/oder zumindest teilweise aus Glas gebildet sein.

Unter einem Deckel ist anmeldungsgemäß insbesondere zumindest ein Verschluss- und/oder Abdeckelement zu verstehen, mit dem die Öffnung des Topfs (vollständig) verschließbar bzw. abdeckbar ist. Der Deckel kann wiederum eine Deckelöffnung aufweisen, beispielsweise für eine Kopplung mit einem weiteren Zubehörteil. Bei Varianten der Anmeldung kann der Deckel noch Zusatzfunktionen aufweisen, wie eine Schneidfunktion.

Anmeldungsgemäß kann der Deckel mit dem Topf verriegelt werden. Insbesondere ist der erste Deckel relativ zu dem Topf zwischen einer unverriegelten Position und einer (definierten) verriegelten Position bewegbar. In der verriegelten Position befindet sich der Deckel bzw. die Gefäßanordnung in einem (mechanischen) Verriegelungszustand. Die anmeldungsgemäße Verriegelung ist insbesondere eine mechanische Verriegelung bzw. Blockierung des Deckels.

In dem Topf kann mindestens ein weiteres Zubehörteil anordnenbar sein, wie ein Schneidwerkzeug und/oder ein Rührwerkzeug.

Insbesondere ist ein anmeldungsgemäßes Zubehörteil eingerichtet zum (unmittelbaren und/oder mittelbaren) Positionieren an einer Gerätebasis des Küchengeräts. Beispielsweise kann das Zubehörteil direkt an der Gerätebasis positioniert werden, insbesondere mit dieser gekoppelt werden. Alternativ kann das Zubehörteil an einem weiteren Zubehörteil positionierbar sein, insbesondere koppelbar sein, welches an der Gerätebasis (unmittelbar oder mittelbar) angeordnet bzw. positioniert ist.

Das Küchengerät umfasst eine Leseanordnung. Die Leseanordnung umfasst eine Lesesteuerung und mindestens eine mit der Lesesteuerung verbindbare Leseantenne. Die Leseanordnung kann zumindest teilweise in einer Gerätebasis des Küchengeräts und/oder zumindest teilweise in dem Zubehörteil integriert sein. Insbesondere kann die Lesesteuerung (insbesondere umfassend ein Auswertemodul) in einer Gerätebasis des Küchengeräts oder in dem Zubehörteil (z.B. Topf) integriert sein. Bei einer Ausführungsform kann auch nur das Auswertemodul in dem Zubehörteil integriert sein und die übrige Lesesteuerung in der Gerätebasis.

Das Zubehörteil umfasst eine Transponderanordnung. Die Transponderanordnung umfasst mindestens einen drahtlos bzw. kontaktlos auslesbaren Transponder. Der Transponder ist insbesondere durch die genannte Leseanordnung auslesbar. Insbesondere korrespondiert der Transponder zu der Leseanordnung.

Anmeldungsgemäß ist der Transponder mit mindestens einen Zubehörlagesensor verbunden und/oder umfasst diesen. Der mindestens eine Zubehörlagesensor ist eingerichtet zum Erfassen mindestens eines Zubehörlageparameters des Zubehörteils. Insbesondere kann ein (augenblicklicher) Zubehörlageparameter bzw. ein (augenblicklicher) Zubehörlageparameterwert durch den Zubehörlagesensor gemessen werden.

Vorzugsweise kann/können der mindestens eine Zubehörlageparameter ein Querachsenwinkel, ein Längsachsenwinkel und/oder ein Vertikalachsenwinkel sein. Unter einer Querachse ist insbesondere die Körperachse zu verstehen, die quer zur längsten Ausdehnung eines Körpers (z.B. Zubehörteil, Gerätebasis etc.) steht. Der Drehwinkel um diese Achse ist insbesondere der Querachsenwinkel. Unter einer Längsachse ist insbesondere die Körperachse zu verstehen, die der Richtung der größten Ausdehnung eines Körpers (z.B. Zubehörteil, Gerätebasis etc.) entspricht. Der Drehwinkel um diese Achse ist insbesondere der Längsachsenwinkel. Unter einer Vertikalachse ist insbesondere die Körperachse zu verstehen, die vertikal zur längsten Ausdehnung eines Körpers (z.B. Zubehörteil, Gerätebasis etc.) steht. Der Drehwinkel um diese Achse ist insbesondere der Vertikalachsenwinkel.

Wie bereits beschrieben wurde, umfasst die anmeldungsgemäße Transponderanordnung den Transponder und den mindestens einen Zubehörlagesensor. Dies erlaubt es, dass durch Auslesen der Transponderanordnung der mindestens eine erfasste Zubehörlageparameter ausgelesen wird. Insbesondere stellt der mindestens eine Zubehörlagesensor den mindestens einen Zubehörlageparameter dem Transponder (zumindest auf Anfrage durch den Transponder) zur Verfügung, so dass insbesondere der mindestens eine Zubehörlageparameter durch Auslesen des Transponders ausgelesen werden kann. Anders ausgedrückt, ermöglicht ein auslesbarer Transponder ein Auslesen des mindestens einen Zubehörlageparameters. So ist die Transponderanordnung eingerichtet zumindest zum Übertragen des mindestens einen erfassten Zubehörlageparameters an die Leseanordnung.

Gemäß einer bevorzugten Ausführungsform des anmeldungsgemäßen Zubehörteils kann der Transponder ein RFID Transponder sein. Ein RFID Transponder (umfassend insbesondere auch NFC Transponder) ist in einfacher Weise und kostengünstig implementierbar. Ferner kann ein RFID Transponder zuverlässig ausgelesen werden.

Ein RFID Transponder kann eine Transponder-Antennenspule umfassen. Die Transponder-Antennenspule kann eingerichtet sein zum Empfangen eines Lesefelds bzw. Abfragefelds einer Leseanordnung.

Vorzugsweise kann der Transponder ein passiver Transponder sein. Passiv meint insbesondere, dass der Transponder nicht aktiv ein Sendefeld aussenden kann, sondern insbesondere nur ein empfangenes Lesefeld (abhängig von der zu übertragenden Information) manipulieren bzw. codieren kann. Passiv meint (ferner) insbesondere, dass der Transponder über keine eigene Energiequelle (z.B. Batterie) verfügt, sondern durch das Lesefeld bzw. Sendefeld der Leseantenne mit Energie versorgt wird.

Wie beschrieben wurde, kann der Transponder vorzugsweise eine Spule als Empfangsantenne aufweisen. Durch Induktion, ähnlich wie in einem Transformator, kann ein Kondensator des Transponders aufgeladen werden. Diese Energie kann durch den Transponder insbesondere zum Antworten auf eine in dem Lesefeld enthaltene Anfrage verwendet werden. Hierdurch kann ein einfacher und zuverlässig arbeitender Transponder bereitgestellt werden.

Gemäß einer bevorzugten Ausführungsform des anmeldungsgemäßen Zubehörteils kann der Transponder eingerichtet sein zum Versorgen des Zubehörlagesensors mit elektrischer Energie, basierend auf einem empfangenen Lesefeld der Leseantenne. Wie bereits beschrieben wurde, kann der Transponder die in dem Lesefeld enthaltene Energie verwerten. Diese Energie kann zumindest teilweise dem mindestens einen Zubehörlagesensor zur Verfügung gestellt werden. Insbesondere kann in dem Transponder ein entsprechend eingerichteter Kondensator angeordnet sein.

Es versteht sich, dass bei anderen Varianten der Anmeldung die Transponderanordnung auch über eine eigene Energiequelle verfügen kann, wie eine (wiederaufladbare) Batterie. Bei dieser Variante ist dann der Transponder in der Lage, aktiv ein Sendefeld auszusenden oder auf ein empfangenes Lesefeld oder empfangenes Signal zu reagieren.

Gemäß einer weiteren Ausführungsform des anmeldungsgemäßen Zubehörteils kann der Transponder mindestens einen auslesbaren (Daten-)Speicher umfassen. In dem Speicher kann/können zumindest eine Zubehörkennung und/oder eine Zubehörtypkennung gespeichert sein. Eine Zubehörkennung kann systemweit eineindeutig ein Zubehörteil identifizieren. Eine Zubehörtypkennung kann systemweit eindeutig einen bestimmten Zubehörteiltyp aus einer Mehrzahl von Zubehörteiltypen identifizieren. Bei einer Variante der Anmeldung kann die Zubehörtypkennung in der Zubehörkennung enthalten sein. Die Zubehörkennung und/oder Zubehörtypkennung sind insbesondere über die Leseantenne durch die Lesesteuerung auslesbar. Insbesondere kann der Zubehörtransponder eingerichtet sein zum Antworten auf den Erhalt eines Lesefelds mit der Zubehörkennung und/oder Zubehörtypkennung. Insbesondere ermöglicht die Auslesbarkeit Zubehörkennung und/oder Zubehörtypkennung eine Identifizierung des Zubehörteils bzw. des Zubehörtyps.

Es versteht sich, dass bei Varianten der Anmeldung mindestens ein weiteres Datum in dem Speicher gespeichert und insbesondere auslesbar sein kann (z.B. mindestens eine zulässige und/oder nicht zulässige Gerätefunktion des Zubehörteils etc.).

Vorzugsweise kann abhängig von einem identifizierten Zubehörteil bzw. Zubehörtyp eine bestimmte Gerätefunktion des Küchengeräts für einen Nutzer freigegeben werden. Dies meint insbesondere, dass eine bestimmte Gerätefunktion nur bei einem Identifizieren mindestens eines bestimmten Zubehörtyps freigebbar ist. Bei einem Identifizieren eines anderen Zubehörtyps kann diese Gerätefunktion gesperrt werden bzw. bleiben. Die Sicherheit beim Betrieb des Küchengeräts kann verbessert werden.

Gemäß einer weiteren Ausführungsform des anmeldungsgemäßen Zubehörteils kann der Transponder mindestens einen auslesbaren (Daten-)Speicher umfassen. In dem Speicher kann zumindest eine Kalibrierungsinformation des Zubehörlagesensors gespeichert sein. Vorzugsweise kann die Kalibrierungsinformation des Zubehörlagesensors zusätzlich zu der Zubehörkennung und/oder Zubehörtypkennung in dem Speicher gespeichert sein.

Es ist insbesondere erkannt worden, dass es bei der Fertigung eines Zubehörteils und/oder Transponderanordnungen zu fertigungsbasierten Schwankungen kommen kann. Vorzugsweise kann insbesondere bei jedem Zubehörteil (und jedem Küchengerät) eine werkseitige Kalibrierung durchgeführt werden. Hierdurch können beispielsweise fertigungsbedingte Schwankungen beim Befestigen und/oder Positionieren des Zubehörlagesensors an bzw. in dem Zubehörteil berücksichtigt werden, insbesondere bei der Auswertung eines ausgelesenen Zubehörlageparameters.

Gemäß einer bevorzugten Ausführungsform des anmeldungsgemäßen Zubehörteils kann der Zubehörlagesensor ein Beschleunigungssensor sein, insbesondere ein 3-Achsen Beschleunigungssensor. Die Achsen können insbesondere die Querachse, Längsachse und Vertikalachse sein. Der mindestens eine Zubehörlageparameter kann vorzugsweise ein Neigungswinkel des Zubehörteils in Bezug zur Erdbeschleunigung sein. Beispielsweise kann aus einem erfassten Querachsenwinkel, Längsachsenwinkel und/oder Vertikalachsenwinkel der Neigungswinkel des Zubehörteils in Bezug zur Erdbeschleunigung bestimmt werden. Der Neigungswinkel in Bezug zur Erdbeschleunigung kann dann besonders vorteilhaft genutzt werden, um die korrekte Positionierung des Zubehörteils abzuschätzen.

Das Küchengerät umfasst mindestens ein zuvor beschriebenes Zubehörteil. Das Küchengerät umfasst eine (zuvor beschriebene) Leseanordnung, umfassend eine Lesesteuerung und mindestens eine mit der Lesesteuerung verbindbare Leseantenne. Die Leseanordnung ist eingerichtet zumindest zum Auslesen des Zubehörlageparameters aus der Transponderanordnung.

Die Lesesteuerung ist vorzugsweise eine RFID Lesesteuerung. Insbesondere kann die Lesesteuerung ein RFID Leser (z.B. gebildet durch einen Mikrocontroller) sein. Die Leseantenne ist insbesondere eine Antennenspule. Insbesondere kann die Antennenspule eine RFID-basierte Antennenspule sein. Die Antennenspule kann aus Kupfer gebildet sein. Es versteht sich, dass auch andere elektrisch leitfähige Materialien, insbesondere Metalle, verwendet werden können, beispielsweise Aluminium oder dergleichen. Die Anzahl an Windungen der Antennenspule kann vorzugweise zwischen 1 und 10 sein, besonders bevorzugt zwischen 1 und 5, ganz besonders bevorzugt insbesondere 3 oder 4.

Bevorzugt kann das Küchengerät eine Gerätebasis umfassen. Ferner kann das Küchengerät eine Gefäßanordnung umfassen. Wie beschrieben wurde, kann bei einer Ausführungsform die Gefäßanordnung ein Zubehörteil sein und/oder ein Zubehörteil (beispielsweise Topf oder Deckel) umfassen.

Die Gerätebasis und/oder die Gefäßanordnung und/oder das Zubehörteil kann/können die Leseanordnung umfassen. Vorzugsweise kann die Lesesteuerung in der Gerätebasis integriert sein, beispielsweise in der Gerätesteuerung der Gerätebasis. Es ist jedoch auch denkbar, dass das Zubehörteil (z.B. ein Topf) die Lesesteuerung umfasst.

Die mindestens eine Leseantenne kann vorzugsweise in oder an der Gefäßanordnung angeordnet sein, beispielsweise am bzw. im Topf und/oder am bzw. im Deckel. Auch kann die mindestens eine Leseantenne in der Gerätebasis angeordnet sein. Bei Varianten der Anmeldung können auch zwei oder mehr Leseantennen vorgesehen sein.

Die Gerätebasis kann vorzugsweise eine zu dem Topf der Gefäßanordnung korrespondierende Topfaufnahme aufweisen. Wenn die Leseantenne in oder an der Gefäßanordnung angeordnet ist, kann eine elektrische Verbindung zwischen einem ersten unteren Topfkontakt des Topfs und einem ersten Basiskontakt der Gerätebasis und eine elektrische Verbindung zwischen einem zweiten unteren Topfkontakt des Topfs und einem zweiten Basiskontakt der Gerätebasis hergestellt werden, wenn der Topf in der Topfaufnahme angeordnet ist.

Die Topfaufnahme ist vorzugsweise eingerichtet zum Aufnehmen des Topfs, insbesondere zumindest des Topfbodens. Die Topfaufnahme kann derart zu dem Topf der Gefäßanordnung (strukturell) korrespondieren, dass eine elektrische Verbindung zwischen dem ersten unteren Topfkontakt und einem ersten elektrischen Basiskontakt der Gerätebasis und eine elektrische Verbindung zwischen dem zweiten unteren Topfkontakt und einem zweiten elektrischen Basiskontakt der Gerätebasis (nur dann) hergestellt werden, wenn der Topf in der Topfaufnahme (korrekt) angeordnet ist.

Die Lesesteuerung kann elektrisch mit dem ersten Basiskontakt und zweiten Basiskontakt verbunden sein. Die mindestens eine Leseantenne kann mit den unteren Topfkontakten elektrisch verbindbar sein. Beispielsweise kann mindestens eine Windung in der Topfwandung (z.B. gebildet aus Kunststoff) integriert sein.

Bei einer nachfolgend näher beschriebenen bevorzugten Ausführungsform kann die Leseantenne an bzw. in dem Deckel angeordnet sein. Bei dieser Ausführungsform kann der Deckel die mindestens eine mit einem ersten Deckelkontakt und einem zweiten Deckelkontakt verbundene Leseantenne aufweisen. Der Topf kann mindestens eine erste zwischen einem ersten oberen Topfkontakt und dem ersten unteren Topfkontakt verlaufende Topfverbindung und eine zweite zwischen einem zweiten oberen Topfkontakt und dem zweiten unteren Topfkontakt verlaufende Topfverbindung aufweisen.

Der erste Deckelkontakt und der zweite Deckelkontakt können angeordnet sein, derart, dass eine elektrische Verbindung zwischen dem ersten Deckelkontakt und dem ersten oberen Topfkontakt und eine elektrische Verbindung zwischen dem zweiten Deckelkontakt und dem zweiten oberen Topfkontakt nur in der verriegelten Position des Deckels (also wenn der Deckel korrekt positioniert ist) hergestellt werden.

Mit anderen Worten, kann bei dieser Ausführungsform in oder an dem Deckel eine Leseantenne angeordnet sein, die nur dann mit elektrischer Energie versorgt werden kann bzw. nur dann mit einem Antennensignal beaufschlagt werden kann, wenn der Deckel in der verriegelten Position ist. Nur in der verriegelten Position des Deckels kann also die Leseantenne elektromagnetische Signale insbesondere in Form eines Lesefelds (auch Abfragefeld genannt) aussenden. Mit anderen Worten, ein Transponder (auch als Tag bezeichnet) einer Transponderanordnung ist nur dann auslesbar durch die Leseantenne des Deckels, wenn der Deckel (ordnungsgemäß) mit dem Topf verriegelt ist.

Besonders bevorzugt kann die mindestens eine Windung der Leseantenne entlang des Deckelrands verlaufen und/oder entsprechend gebogen sein. Die mindestens eine Windung kann beispielsweise in dem Deckel bei der Fertigung in einen Deckel-Grundkörper eingelegt und anschließend mit einer Abdeckung (vorzugsweise gebildet aus Kunststoff) versehen werden. Die Abdeckung kann z.B. per Ultraschallschweißen an dem Deckel-Grundkörper befestigt werden. In einfacher Weise kann eine Leseantenne bereitgestellt werden.

Gemäß einer weiteren Ausführungsform des anmeldungsgemäßen Küchengeräts kann die Lesesteuerung eingerichtet sein zum Beaufschlagen der Leseantenne mit einem Antennensignal, so dass ein Lesefeld bzw. Abfragefeld durch die Leseantenne ausgesendet wird. Die Lesesteuerung kann eingerichtet sein zum Bereitstellen des Antennensignals. Insbesondere kann die Lesesteuerung das Antennensignal erzeugen und die Leseantenne damit beaufschlagen, so dass ein entsprechendes Lesefeld durch die Leseantenne abgestrahlt wird.

Gemäß einer bevorzugten Ausführungsform des anmeldungsgemäßen Küchengeräts kann die Lesesteuerung ein Auswertemodul umfassen. Das Auswertemodul kann eingerichtet sein zum Bestimmen einer Betriebsposition des Zubehörteils, basierend auf dem ausgelesenen Zubehörlageparameter und einem Betriebspositionskriterium.

Das Auswertemodul kann insbesondere in der Gerätebasis oder dem Zubehörteil, wie beispielswiese der Gefäßanorndung, integriert sein.

Unter einer Betriebsposition des Zubehörteils ist insbesondere eine ordnungsgemäße bzw. korrekte (mittelbare oder unmittelbare) Positionierung des Zubehörteils an dem Küchengerät zu verstehen, bei der insbesondere das Zubehörteil bestimmungsgemäß verwendbar ist bzw. betrieben werden kann. Beispielsweise kann das Zubehörteil in der Betriebsposition (ordnungsgemäß) aufgelegt, aufgesetzt, aufgesteckt etc. sein. Wie bereits beschrieben wurde, umfasst eine Positionierung des Zubehörteils an dem Küchengerät eine Positionierung eines ersten Zubehörteils an einem weiteren Zubehörteil des Küchengeräts. Bei einer Ausführungsform kann die Betriebsposition eine Verriegelungsposition sein, bei der das Zubehörteil mit dem Küchengerät bzw. einem weiteren Zubehörteil (z.B. ein an einem Topf verriegelter Deckel, wie beschrieben wurde) (mechanisch) verriegelt ist.

Das Auswertemodul kann eingerichtet sein zum Bestimmen, ob ein Zubehörteil ordnungsgemäß bzw. betriebsfähig an dem Küchengerät positioniert bzw. angeordnet ist, indem der mindestens eine ausgelesene Zubehörlageparameter ausgewertet wird. Vorzugsweise kann durch das Auswertemodul ein Vergleich des mindestens einen ausgelesenen Zubehörlageparameters (beispielsweise ein vorgenannter Winkel, insbesondere ein Neigungswinkel in Bezug zur Erdbeschleunigung) mit dem Betriebspositionskriterium durchgeführt werden.

Das Betriebspositionskriterium kann definieren, wann eine ordnungsgemäße bzw. betriebsfähige Positionierung vorliegt (oder wann nicht). Beispielsweise kann das Betriebspositionskriterium einen Winkelbereich definieren, bei dem eine ordnungsgemäße Positionierung vorliegt. Wenn der ausgelesene Winkel(wert) in dem Winkelbereich liegt, kann das Auswertemodul feststellen, dass das Zubehörteil ordnungsgemäß an dem Küchengerät positioniert bzw. angeordnet ist. Mit anderen Worten, eine Betriebsposition kann bestimmt werden. Wenn der der ausgelesene Winkel(wert) nicht in dem Winkelbereich liegt, kann das Auswertemodul feststellen, dass das Zubehörteil nicht ordnungsgemäß an dem Küchengerät positioniert bzw. angeordnet ist. Mit anderen Worten, eine Nicht-Betriebsposition kann bestimmt werden.

Vorzugsweise sind an dem Küchengerät und/oder dem mindestens einen Zubehörteil konstruktive bzw. strukturelle Maßnahmen vorgesehen, die den korrekten Zubehörlageparameter (also der Parameterwert, der das Betriebspositionskriterium erfüllt) nur an der korrekten Betriebsposition und insbesondere im Lesebereich bzw. Erfassungsbereich der Leseantenne zulassen. Dies kann beispielsweise durch Führungselemente, wie Rundungen, Verdickungen, Nuten und/oder Vertiefungen, an dem Küchengerät und/oder dem mindestens einen Zubehörteil erreicht werden (z. B. muss ein Zubehörteil in Form eines Rühraufsatzes korrekt auf einem weiteren Zubehörteil in Form eines Messers gesteckt werden, da dieser ansonsten umfällt).

Vorzugsweise kann die geometrische Anordnung bzw. Position des Zubehörlagesensors in dem Zubehörteil dem Auswertemodul bekannt sein. Bei einer Ausführungsform kann der Zubehörlagesensor in jedem Zubehörteil oder zumindest in jedem Zubehörteiltyp stets gleich positioniert und ausgerichtet sein.

Bei einer weiteren Ausführungsform des anmeldungsgemäßen Küchengeräts kann die Leseanordnung eingerichtet sein zumindest zum Auslesen der Zubehörkennung und/oder der Zubehörtypkennung aus der Transponderanordnung. Das Auswertemodul kann eingerichtet sein zum Bestimmen der Betriebsposition des Zubehörteils, basierend auf der Zubehörkennung und/oder der Zubehörtypkennung.

Vorzugsweise kann ein Zubehörtypkriterium vordefiniert und insbesondere in der Lesesteuerung gespeichert sein. Das Zubehörtypkriterium kann eine Zuordnungstabelle sein, bei der jedem Zubehörtyp ein (typspezifisches) Betriebspositionskriterium zugeordnet sein kann. Vorzugsweise kann der jeweilige Zubehörtyp eine jeweilige Zubehörtypkennung sein.

Die Lesesteuerung kann die Zubehörtypkennung auslesen. Die ausgelesene Zubehörtypkennung kann mit den gespeicherten Zubehörtypkennungen verglichen werden. Wenn die Lesesteuerung, insbesondere das Auswertemodul, eine Identität zwischen einer gespeicherten Zubehörtypkennung und der ausgelesenen Zubehörtypkennung feststellt, kann das Betriebspositionskriterium (für den beschriebenen Vergleich) herangezogen werden, das dieser gespeicherten Zubehörtypkennung zugeordnet ist. In zuverlässiger Weise kann auch bei unterschiedlichen Zubehörtypen eine korrekte Positionierung des jeweiligen Zubehörtyps bestimmt werden.

Wenn in dem Datenspeicher des Transponders ferner mindestens eine Kalibrierungsinformation gespeichert ist, kann die Leseanordnung vorzugsweise eingerichtet sein zum Auslesen der mindestens einen Kalibrierungsinformation. Ferner kann das Auswertemodul eingerichtet sein zum Korrigieren des mindestens einen ausgelesenen Zubehörlageparameters, basierend auf der mindestens einen Kalibrierungsinformation. Der mindestens eine korrigierte Zubehörlageparameter, wie ein korrigierter Neigungswinkel in Bezug zur Erdbeschleunigung, kann dann beispielsweise mit dem Betriebspositionskriterium ausgewertet werden, insbesondere verglichen werden. Die Zuverlässigkeit der Auswertung kann noch weiter verbessert werden.

Das Küchengerät (insbesondere die Gerätebasis) umfasst mindestens einen Küchengerätlagesensor. Der Küchengerätlagesensor ist eingerichtet zum Erfassen eines Küchengerätlageparameters. Der Küchengerätlagesensor kann insbesondere wie ein Zubehörlagesensor gebildet sein. Vorzugsweise kann der Küchengerätlagesensor ein Beschleunigungssensor sein, insbesondere ein 3-Achsen Beschleunigungssensor. Die Achsen können insbesondere die Querachse, Längsachse und Vertikalachse sein. Der mindestens eine Zubehörlageparameter kann vorzugsweise ein Neigungswinkel des Küchengeräts (insbesondere der Gerätebasis) in Bezug zur Erdbeschleunigung sein. Beispielsweise kann aus einem erfassten Querachsenwinkel, Längsachsenwinkel und/oder Vertikalachsenwinkel der Neigungswinkel des Küchengeräts (insbesondere der Gerätebasis) in Bezug zur Erdbeschleunigung bestimmt werden. Der Neigungswinkel in Bezug zur Erdbeschleunigung kann dann besonders vorteilhaft genutzt werden, um die korrekte Positionierung des Küchengeräts (insbesondere der Gerätebasis) abzuschätzen.

Das Betriebspositionskriterium kann vorzugsweise auf dem erfassten Küchengerätlageparameter basieren. Beispielsweise kann der mindestens eine augenblicklich erfasste Küchengerätlageparameterwert das Betriebspositionskriterium bilden. Es versteht sich, dass ein Toleranzbereich bzw.

Winkelbereich um den augenblicklich erfassten Küchengerätlageparameterwert vorgesehen sein kann.

Wenn der Zubehörlagesensor und der Küchengerätlagesensor identisch positioniert bzw. ausgerichtet sind, kann der ausgelesene Zubehörlageparameterwert mit dem Küchengerätlageparameterwert bzw. dem genannten Toleranzbereich durch das Auswertemodul verglichen werden. Insbesondere kann das Auswertemodul eingerichtet sein zum Vergleichen des ausgelesenen Zubehörlageparameters (insbesondere des genannten Zubehörneigungswinkels in Bezug zur Erdbeschleunigung) mit dem Küchengerätlageparameter (insbesondere des Küchengeräteneigungswinkels in Bezug zur Erdbeschleunigung). Das Auswertemodul kann eingerichtet sein zum Bestimmen der korrekten Positionierung bzw. der Betriebsposition des Zubehörteils, basierend auf dem Vergleichsergebnis. Wenn der ausgelesene Winkel(wert) in dem genannten Toleranz- bzw. Winkelbereich liegt, kann das Auswertemodul feststellen, dass das Zubehörteil ordnungsgemäß an dem Küchengerät positioniert bzw. angeordnet ist, so dass es insbesondere betriebsbereit ist. Mit anderen Worten, eine Betriebsposition kann bestimmt werden. Wenn der ausgelesene Winkel(wert) nicht in dem Toleranz- bzw. Winkelbereich liegt, kann das Auswertemodul feststellen, dass das Zubehörteil nicht ordnungsgemäß an dem Küchengerät positioniert bzw. angeordnet ist. Insbesondere ist das Zubehörteil nicht betriebsbereit. Mit anderen Worten, eine Nicht-Betriebsposition kann bestimmt werden.

Insbesondere ermöglicht der Küchengerätlagesensor, dass eine eventuelle Neigung des Gesamtsystems bzw. Küchengeräts, hervorgerufen beispielsweise durch eine schiefe Küchenarbeitsplatte oder dergleichen, bei der Auswertung berücksichtigt werden kann. Die Zuverlässigkeit der Auswertung kann noch weiter verbessert werden.

Wenn der Zubehörlagesensor und der Küchengerätlagesensor bei einem Zubehörtyp nicht identisch positioniert bzw. ausgerichtet sind, kann insbesondere in dem

Zubehörtypkriterium die unterschiedliche Ausrichtung definiert sein. Insbesondere kann einer der Parameter mittels des genannten Zubehörtypkriteriums normiert werden. So kann das Zubehörtypkriterium bei dem genannten Vergleich berücksichtigt werden, indem zunächst die Zubehörtypkennung ausgelesen und das zugehörige Zubehörtypkriterium bestimmt wird, basierend auf der ausgelesenen Zubehörtypkennung (wie beschrieben wurde).

Gemäß einer weiteren Ausführungsform des anmeldungsgemäßen Küchengeräts kann die Lesesteuerung mindestens einen (Daten-)Speicher umfassen. In dem Speicher kann zumindest eine Kalibrierungsinformation des Küchengerätlagesensors gespeichert sein. Es ist insbesondere erkannt worden, dass es bei der Fertigung eines Küchengeräts zu fertigungsbasierten Schwankungen kommen kann. Vorzugsweise kann insbesondere bei jedem Küchengerät eine werkseitige Kalibrierung durchgeführt werden. Hierdurch können beispielsweise fertigungsbedingte Schwankungen beim Befestigen des Küchengerätlagesensors an bzw. in dem Küchengerät (insbesondere der Gerätebasis) berücksichtigt werden, insbesondere bei der Auswertung eines ausgelesenen Zubehörlageparameters und des Küchengerätlageparameterwerts bzw. des genannten Toleranzbereichs.

Ein weiterer Aspekt der Anmeldung ist ein Verfahren zum Bestimmen der Betriebsposition eines zuvor beschriebenen Zubehörteils. Das Verfahren umfasst
- Auslesen, durch eine Leseanordnung eines Küchengeräts, des durch den Zubehörlagesensor erfassten Zubehörlageparameters des Zubehörteils, und
- Bestimmen, durch ein Auswertemodul der Leseanordnung, einer Betriebsposition des Zubehörteils, basierend auf dem ausgelesenen Zubehörlageparameter und einem Betriebspositionskriterium.

Die Leseanordnung kann insbesondere eine zuvor beschriebene Leseanordnung sein. Vorzugsweise kann eine Gerätebasis eines zuvor beschriebenen Küchengeräts die Lesesteuerung umfassen.

Das Verfahren kann zum Bestimmen der Betriebsposition eines zuvor beschriebenen Zubehörteils bei einem zuvor beschriebenen Küchengerät verwendet werden. Vorzugweise kann das Verfahren ferner zum Identifizieren des Zubehörteiltyps verwendet werden, wie zuvor beschrieben wurde.

Ein Modul, eine Anordnung oder dergleichen kann zumindest teilweise durch Hardwareelemente und/oder Softwareelemente realisiert sein. Grundsätzlich können Daten unmittelbar übertragen oder zunächst gesammelt und zwischengespeichert werden, um sie dann z.B. zu bestimmten Zeitpunkten zusammen zu übertragen. Ferner beziehen sich die Begriffe, wie "oben", "ober", "unten", "unter" etc., auf die vertikal zu einer horizontalen Ebene verlaufende Richtung und auf eine auf einer horizontalen Fläche aufgestellte/s Gefäßanordnung und/oder Küchengerät. Sofern nichts anderes angegeben ist, dienen Ausdrücke, wie "erstens", "zweitens" etc., lediglich der Unterscheidung zweier Elemente und geben keine Reihenfolge an.

Die Merkmale der Gefäßanordnungen, Küchengeräte und Verfahren sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Zubehörteil, das anmeldungsgemäße Küchengerät und das anmeldungsgemäße Verfahren auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Zubehörteils gemäß der vorliegenden Anmeldung,
- Fig. 2: eine schematische Ansicht eines Ausführungsbeispiels eines Küchengeräts gemäß der vorliegenden Anmeldung,
- Fig. 3: eine schematische Ansicht eines weiteren Ausführungsbeispiels eines Küchengeräts gemäß der vorliegenden Anmeldung,
- Fig. 4a: eine schematische Ansicht eines Ausführungsbeispiels eines Topfs eines Küchengeräts gemäß der vorliegenden Anmeldung,
- Fig. 4b: eine vergrößerte Ansicht eines oberen Topfkontakts des Topfs gemäß Figur 4a,
- Fig. 4c: eine schematische Ansicht eines Ausführungsbeispiels eines beispielhaften Zubehörteils in Form eines Deckels eines Küchengeräts gemäß der vorliegenden Anmeldung,
- Fig. 5a: eine schematische Ansicht eines Ausführungsbeispiels eines Zubehörteils gemäß der vorliegenden Anmeldung in einer Betriebsposition,
- Fig. 5b: eine schematische Ansicht eines Ausführungsbeispiels eines Zubehörteils gemäß der vorliegenden Anmeldung in einer Nicht-Betriebsposition,
- Fig. 6: eine schematische Ansicht eines weiteren Ausführungsbeispiel eines Küchengeräts gemäß der vorliegenden Anmeldung, und
- Fig. 7: ein Diagramm eines Ausführungsbeispiels eines Verfahrens gemäß der vorliegenden Anmeldung.

Nachfolgend werden für ähnliche Elemente ähnliche Bezugszeichen verwendet.

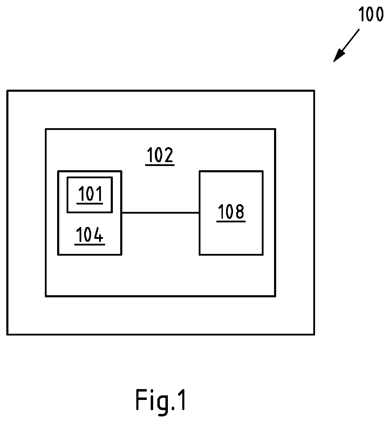

Die Figur 1 zeigt eine schematische Ansicht eines Ausführungsbeispiels eines Zubehörteils 100 für ein (nicht dargestelltes) Küchengerät. Das Küchengerät ist insbesondere eine Küchenmaschine, eingerichtet zum zumindest teilweise automatisierten Zubereiten von Speisen. Wie noch näher beschrieben wird, umfasst das Küchengerät eine Leseanordnung mit einer Lesesteuerung und mindestens einer mit der Lesesteuerung verbindbaren Leseantenne.

Das Zubehörteil 100 ist beispielsweise ein Varoma, Rühraufsatz, Messerabdeckung, Messbecher, Deckel, Garkörbchen oder dergleichen. Das Zubehörteil 100 ist mit dem Küchengerät mittelbar oder unmittelbar koppelbar.

Um insbesondere eine korrekte Positionierung des Zubehörteils 100 an bzw. zu dem Küchengerät detektieren zu können, also um insbesondere die Betriebsposition des Zubehörteils 100 detektieren zu können, umfasst das Zubehörteil 100 anmeldungsgemäß eine Transponderanordnung 102.

Die Transponderanordnung 102 ist insbesondere durch die Leseantenne zumindest in der Betriebsposition des Zubehörteils 100 auslesbar. Die Transponderanordnung 102 umfasst einen Transponder 104 und einen mit dem Transponder 104 gekoppelten Zubehörlagesensor 108. Der Zubehörlagesensor 108 ist vorzugsweise ein Beschleunigungssensor 108. Der Zubehörlagesensor 108 ist eingerichtet zum Erfassen mindestens eines Zubehörlageparameters (z.B. Vertikalachsenwinkel, Querachsenwinkel und/oder Längsachsenwinkel) des Zubehörteils 100. Vorzugsweise kann der Zubehörlagesensor 108 eingerichtet sein zum Erfassen des Neigungswinkels des Zubehörteils 100 in Bezug zur Erdbeschleunigung.

Der Transponder 104 ist vorzugsweise ein RFID Transponder 104. Insbesondere kann der Zubehörlagesensor 108 dem Transponder 104 den (augenblicklich) erfassten Zubehörlageparameter bzw. -wert bereitstellen. Bei einem passiven Transponder 104 kann beispielsweise der Zubehörlagesensor 108 aktiviert werden, indem der Transponder 104, basierend auf dem empfangenen Lesefeld der Leseantenne, den Zubehörlagesensor 108 mit Energie versorgt. Daraufhin kann der Zubehörlagesensor 108 dem Transponder 104 den (augenblicklich) erfassten Zubehörlageparameter bzw. -wert bereitstellen. Dieser wird anschließend durch den Transponder 104 an die Leseanordnung übertragen. Insbesondere kann der Transponder 104 das Lesefeld entsprechend des mindestens einen (augenblicklich) erfassten Zubehörlageparameters codieren bzw. manipulieren. Dies kann von der Lesesteuerung (insbesondere ein RFID Leser) dekodiert werden.

Optional kann der Transponder 104 mindestens einen auslesbaren Speicher 101 umfassen. Wie beschrieben wurde, können in dem Speicher 101 zumindest eine Zubehörkennung (wie eine Seriennummer oder eine Universally Unique Identifier (UUID)) und/oder Herkunftsinformation (wie Herstelleridentität, Herstellungszeitpunkt, Herstellungsort und/oder Authentifizierungsinformation) und/oder eine Zubehörtypkennung und/oder eine Kalibrierungsinformation des Zubehörlagesensors 108 gespeichert sein. Diese könnte vor dem Vertrieb, während oder am Ende der Fertigung, oder während eines dediziertem Kalibrierungsschrittes hinterlegt werden. Entsprechende Daten sind insbesondere durch die Leseanordnung zusätzlich zu dem (augenblicklich) erfassten Zubehörlageparameter auslesbar.

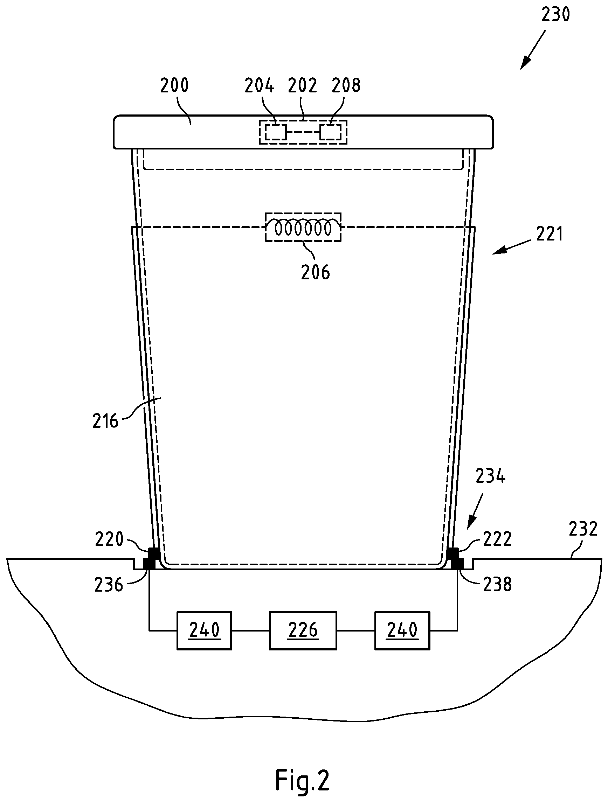

Die Figur 2 zeigt eine schematische Ansicht eines Ausführungsbeispiels eines Küchengeräts 230 gemäß der vorliegenden Anmeldung. Das Küchengerät 230 umfasst eine Gerätebasis 232, einen Topf 216 und als anmeldungsgemäßes Zubehörteil einen Deckel 200. Es versteht sich, dass auch der Topf ein Zubehörteil ist und bei Varianten der Anmeldung über eine anmeldungsgemäße Transponderanordnung verfügen kann.

Der Topf 216 und der Deckel 200 können insbesondere eine Gefäßanordnung des Küchengeräts 230 bilden. Der Topf 216 weist eine umlaufende Topfwandung und einen Topfboden auf.

Der Deckel 200 ist eingerichtet zum Verschließen einer Öffnung des Topfs 216. Dieser verschlossene Zustand der Gefäßanordnung ist in der Figur 2 dargestellt. Insbesondere befindet sich der Deckel 200 in der Figur 1 in der verriegelten Position. Dies meint insbesondere, dass der Deckel 200 mit dem Topf 216 (korrekt) mechanisch verriegelt ist, die Gefäßanordnung also in dem Verriegelungszustand ist. Dies ist vorliegend gleichbedeutend damit, dass das Zubehörteil 200 in der Betriebsposition ist, also insbesondere betriebsbereit an dem Küchengerät 230 positioniert bzw. angeordnet ist.

Der Deckel 200 ist insbesondere relativ bewegbar zu dem Topf 216, zwischen einer unverriegelten Position und einer (definierten) verriegelten Position. Der Verriegelungsmechanismus kann beispielsweise eine Bajonett-Verriegelung oder eine ähnliche mechanische Verriegelung sein.

Das dargestellte Küchengerät 230 umfasst eine Gerätebasis 232 mit einer Topfaufnahme 234. Die Topfaufnahme 234 ist eingerichtet zum Aufnehmen des Topfs 216, insbesondere zumindest des Topfbodens. Wie zu erkennen ist, korrespondiert die Topfaufnahme 234 derart zu dem Topf 216 der Gefäßanordnung, dass eine elektrische Verbindung zwischen einem ersten unteren elektrischen Topfkontakt 220 und einem ersten elektrischen Basiskontakt 236 der Gerätebasis 232 und eine elektrische Verbindung zwischen einem zweiten unteren elektrischen Topfkontakt 222 und einem zweiten elektrischen Basiskontakt 238 der Gerätebasis 232 hergestellt werden, wenn der Topf 216 in der Topfaufnahme 232 (korrekt) angeordnet ist.

Das Küchengerät 230 umfasst eine Leseanordnung 221. Die Leseanordnung 221 umfasst eine Lesesteuerung 226, insbesondere einen RFID-Leser, und eine Leseantenne 206, insbesondere eine Antennenspule. In dem vorliegenden Ausführungsbeispiel ist die Lesesteuerung 226 über ein optionales Filter- und Anpassungsnetzwerk 240 mit dem ersten Basiskontakt 236 und dem zweiten Basiskontakt 238 verbunden. Die Leseantenne 206 ist vorliegend mit dem ersten unteren Topfkontakt 220 und dem zweiten unteren Topfkontakt 222 verbunden.

Wenn der Topf, 216, wie dargestellt, in der Topfaufnahme 234 angeordnet ist, kann die Lesesteuerung 226 die Leseantenne 206 mit einem Antennensignal beaufschlagen, so dass die Leseantenne 206 ein Lesefeld aussendet.

Das Zubehörteil 200 in Form des Deckels 200 umfasst eine Transponderanordnung 202. Die Transponderanordnung 202 kann insbesondere wie die Transponderanordnung nach Figur 1 gebildet sein, so dass zur Vermeidung von Wiederholungen auf die Ausführungen zur Figur 1 verwiesen wird.

Die Leseanordnung 221 ist insbesondere eingerichtet zum Auslesen der Transponderanordnung 202.

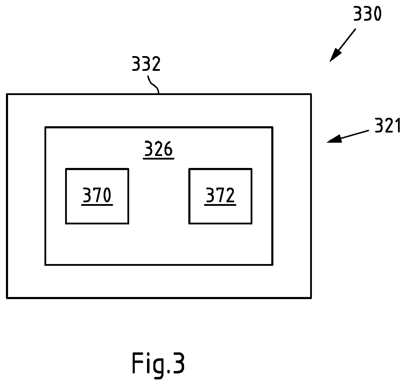

Die Figur 3 zeigt eine schematische Ansicht eines weiteren Ausführungsbeispiels eines Küchengeräts 330 gemäß der vorliegenden Anmeldung. Zur Vermeidung von Wiederholungen werden nachfolgend im Wesentlichen nur die Unterschiede zu den vorherigen Ausführungsbeispielen beschrieben und ansonsten auf die vorherigen Ausführungen verwiesen. Insbesondere wurde zu Gunsten einer besseren Übersicht auf die Darstellung eines Zubehörteils verzichtet.

Die Lesesteuerung 326 der Leseanordnung 321 umfasst vorliegend ein Auswertemodul 370 und einen Küchengerätlagesensor 372. Der Küchengerätlagesensor 372 kann eingerichtet sein zum Erfassen eines Küchengerätlageparameters. Vorzugsweise kann der Küchengerätlagesensor 372 ein Beschleunigungssensor sein, insbesondere ein 3-Achsen Beschleunigungssensor. Die Achsen können insbesondere die Querachse, Längsachse und Vertikalachse sein. Der mindestens eine Zubehörlageparameter kann vorzugsweise ein (augenblicklicher) Neigungswinkel des Küchengeräts 330 (insbesondere der Gerätebasis 332) in Bezug zur Erdbeschleunigung sein. Beispielsweise kann aus einem erfassten Querachsenwinkel, Längsachsenwinkel und/oder Vertikalachsenwinkel der Neigungswinkel des Küchengeräts 330 (insbesondere der Gerätebasis 332) in Bezug zur Erdbeschleunigung bestimmt werden.

Das Auswertemodul 370 kann eingerichtet sein zum Bestimmen, ob das die Transponderanordnung umfassende Zubehörteil ordnungsgemäß an dem Küchengerät 330 positioniert bzw. angeordnet ist. Hierzu kann mindestens ein Zubehörlageparameter aus der Transponderanordnung ausgelesen werden und insbesondere der mindestens eine ausgelesene Zubehörlageparameter ausgewertet werden.

Vorzugsweise kann durch das Auswertemodul 370 ein Vergleich des mindestens einen ausgelesenen Zubehörlageparameters (beispielsweise ein vorgenannter Winkel, insbesondere ein Neigungswinkel in Bezug zur Erdbeschleunigung) mit dem Betriebspositionskriterium erfolgen. Das Betriebspositionskriterium kann definieren, wann eine ordnungsgemäße Positionierung vorliegt (oder wann nicht). Beispielsweise kann das Betriebspositionskriterium einen entsprechenden Winkelbereich definieren. Der Winkelbereich kann insbesondere auf dem mindestens einen Küchengerätlageparameter (z.B. der genannte Neigungswinkel) basieren. Beispielsweise kann der Winkelbereich ein um den augenblicklichen Neigungswinkel liegender Toleranzbereich sein.

Wenn der ausgelesene Winkel(wert) in dem Winkelbereich liegt, kann das Auswertemodul 370 feststellen, dass das Zubehörteil ordnungsgemäß an dem Küchengerät 330 positioniert bzw. angeordnet ist. Wenn der der ausgelesene Winkel(wert) nicht in dem Winkelbereich liegt, kann das Auswertemodul 370 feststellen, dass das Zubehörteil nicht ordnungsgemäß an dem Küchengerät 330 positioniert bzw. angeordnet ist.

Wie bereits beschrieben wurde, kann das Auswertemodul 370 zusätzlich weitere ausgelesene Daten bei der Auswertung heranziehen, wie eine Zubehörkennung (wie eine Seriennummer oder eine Universally Unique Identifier (UUID)) und/oder Herkunftsinformation (wie Herstelleridentität, Herstellungszeitpunkt, Herstellungsort und/oder Authentifizierungsinformation) und/oder eine Zubehörtypkennung und/oder eine Kalibrierungsinformation des Zubehörteils und/oder eine Kalibrierungsinformation des Küchengeräts 330, insbesondere der Gerätebasis 332.

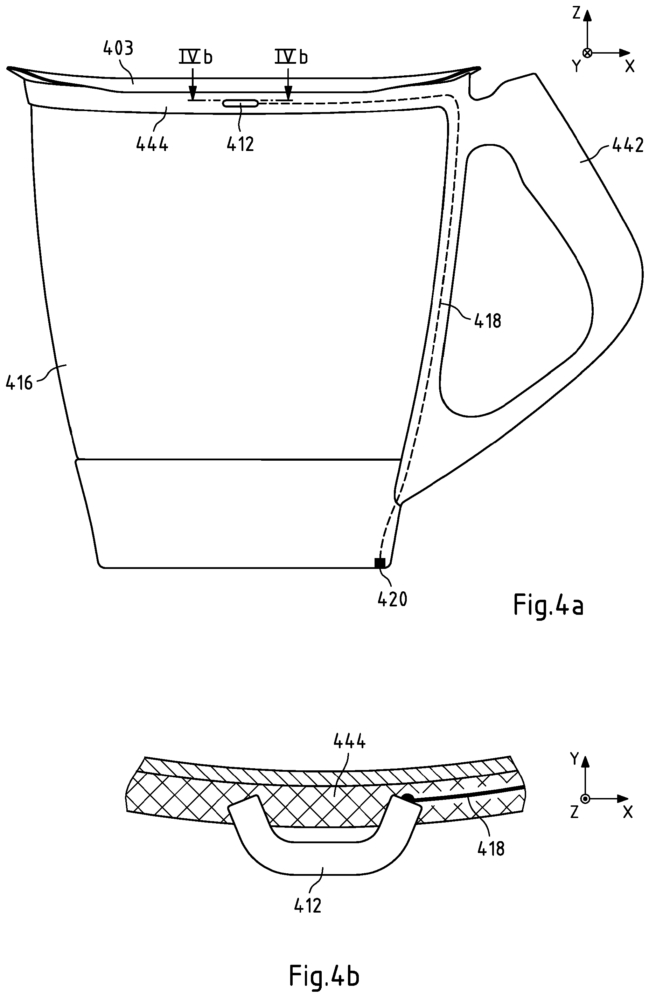

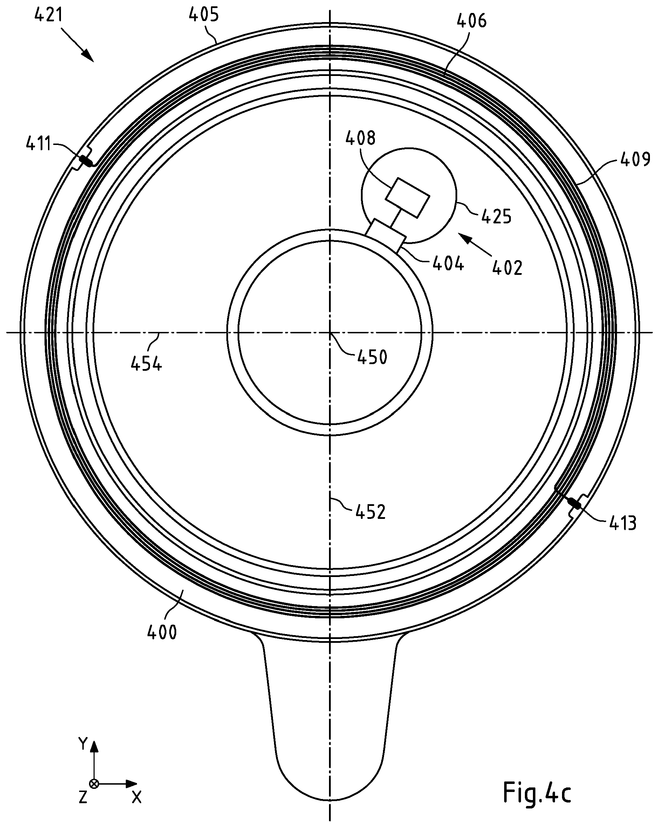

Die Figur 4a zeigt eine schematische Seitenansicht eines Ausführungsbeispiels eines Topfs 416 eines Küchengeräts gemäß der vorliegenden Anmeldung und die Figur 4c eine schematische Draufsicht eines Ausführungsbeispiels eines zu dem Topf 416 strukturell korrespondierenden Deckels 400 des Küchengeräts gemäß der vorliegenden Anmeldung. Die Figur 4b zeigt einen vergrößerten Ausschnitt, insbesondere eine Draufsicht, des Topfs 416 gemäß Figur 4a.

Der Topf 416 ist vorzugsweise teilweise aus Metall und teilweise aus Kunststoff gebildet. Insbesondere kann ein Abschnitt 442 aus Kunststoff gebildet sein. Dieser Abschnitt 442 kann auch den Griff bilden und insbesondere einen an dem Topfrand 403 angeordneten zumindest teilweise, vorzugsweise vollständigen ringförmigen Teilabschnitt 443 aufweisen.

An dem oberen Topfrand 403 ist vorliegend ein erster oberer elektrischer Topfkontakt 412 angeordnet. Vorzugsweise an der gegenüberliegenden Seite des oberen Topfrands 403 ist ein zweiter oberer (nicht gezeigter) elektrischer Topfkontakt angeordnet.

Die erste elektrische Topfverbindung 418 verläuft von dem ersten oberen elektrischen Topfkontakt 412 insbesondere durch den Abschnitt 442 zu dem ersten unteren Topfkontakt 420. Insbesondere kann die erste Topfverbindung 418 in dem Kunststoffabschnitt 442 integriert sein. Der erste untere Topfkontakt 420 ist insbesondere in bzw. an dem Topfboden angeordnet. Die weitere (nicht gezeigte) Topfverbindung kann entsprechend ausgebildet sein.

Der obere erste Topfkontakt 412 sowie der zweite Topfkontakt sind vorzugsweise in dem ringförmigen Teilabschnitt 443 aus Kunststoff eingebettet. Dieser Teilabschnitt 443 weist vorzugsweise einen Teil des Verriegelungsmechanismus der Gefäßanordnung auf. Insbesondere kann der Teilabschnitt 443 Konturen zur Verriegelung des Deckels 400 an dem Topf 416 in der definierten Verriegelungsposition aufweisen.

Wie der Draufsicht des zugehörigen Deckels 400 in Figur 4c zu entnehmen ist, sind ein erster Deckelkontakt 411 und ein zweiter Deckelkontakt 413 an dem Deckel 400 angeordnet, insbesondere an dem äußeren Deckelrand 405.

Vorliegend ist die Leseantenne 406 der Leseanordnung 421 des Küchengeräts insbesondere eine Antennenspule 406. Insbesondere kann die Antennenspule 406 durch mindestens eine Windung 409 gebildet sein, vorzugsweise eine Mehrzahl von Windungen 409, wie dargestellt ist. Die mindestens eine Windung 409 kann insbesondere aus einem Metall gebildet sein, vorzugsweise aus Kupfer.

Wie aus der Figur 4c zu erkennen ist, verläuft die mindestens eine Windung 409 insbesondere entlang des Deckelrands 405 bzw. in der Nähe des Deckelrands 405 von dem ersten Deckelkontakt 411 zu dem zweiten Deckelkontakt 413. Der zweite Deckelkontakt 413 liegt insbesondere an einer dem ersten Deckelkontakt 411 gegenüberliegenden Seite des Deckelrands 405.

Die mindestens eine Windung 409 wird vorzugsweise bei der Fertigung in den Deckel-Grundkörper eingelegt und anschließend mit einer (nicht dargestellten) Abdeckung (vorzugsweise gebildet aus Kunststoff) versehen, welche z.B. per Ultraschallschweißen an dem Deckel-Grundkörper befestigt werden kann.

Vorzugsweise kann der erste Deckelkontakt 411 und der zweite Deckelkontakt 413 an dem Deckel 40 und relativ zu den oberen Topfkontakten 412 angeordnet sein, derart, dass eine elektrische Verbindung zwischen dem ersten Deckelkontakt 411 und dem ersten oberen Topfkontakt 412 und eine elektrische Verbindung zwischen dem zweiten Deckelkontakt 410 und dem zweiten oberen Topfkontakt nur in der verriegelten Position des Deckels 400 hergestellt werden. Anders ausgedrückt, ein Antennensignal kann nur dann durch die Lesesteuerung an die Leseantenne 406 angelegt werden, wenn sich der Deckel 400 in der verriegelten Position befindet. Nur in der verriegelten Position ist der Stromkreis geschlossen.

In dem vorliegenden Ausführungsbeispiel sind die jeweiligen Verbindungen zwischen dem Deckelkontakt und Topfkontakt kontaktbehaftete Verbindungen.

Die Deckelkontakte 411, 413 und die oberen Topfkontakte 412 sind in dem vorliegenden Ausführungsbeispiel als freiliegende elektrische Kontakte 411, 412, 413 gebildet. Vorzugsweise weisen die Deckelkontakte 411, 413 eine erste Längserstreckung in eine erste Richtung auf und der jeweils zugehörige obere Topfkontakt 412 eine zweite Längserstreckung in eine zweite Richtung. Wie zu erkennen ist, ist zwischen der ersten und der zweiten Richtung (die sich insbesondere in der gleichen Ebene befinden) ein Winkel zwischen 10° und 90° vorhanden, vorliegend insbesondere von ca. 90°.

Die jeweiligen Kontakte 411, 412, 413 gleiten beim Bewegen des Deckels 400 von der unverriegelten Position in die verriegelte Position (was z.B. in Form einer Drehbewegung erfolgen kann) aufeinander ab bzw. kontaktbehaftet aneinander entlang. Hierdurch kann eine Beeinträchtigung des Übergangswiderstands an den jeweiligen Kontakten 411, 412, 413 verhindert werden, da evtl. an den Kontakten 411, 412, 413 anhaftende Verunreinigungen abgeschabt werden.

Darüber hinaus kann an dem Deckelkontakt 411, 413 oder Topfkontakt 412 eine Hinterfütterung 444 mit einem elastischen Material (z.B. Silikon) vorgesehen sein.

Vorzugsweise weist der Deckel 400 als Zubehörteil ferner eine Transponderanordnung 402 auf. Mit anderen Worten, können bei einem bevorzugten Ausführungsbeispiel in einem Zubehörteil die Transponderanordnung 402 und die Leseantenne 406 der Leseanordnung 421 angeordnet sein.

Der Transponder 404 ist in der Reichweite der Antennenspule 406 angeordnet. Insbesondere ist der Transponder 408 von der mindestens einen Windung 409 umgeben. **In** einer Ausführungsform können 3 oder 4 Windungen vorhanden sein.

Der mit einem vorbeschriebenen Zubehörlagesensor 408 verbundene Transponder weist eine zweite Antennenspule 425 auf. Beispielsweise kann die Transponderanordnung 402 angeklebt sein. Die Transponderanordnung 402, insbesondere die Antennenspule 425 kann durch eine nicht gezeigte Abdeckung, beispielsweise aus Kunststoff, abgedeckt sein.

Anstelle einer jeweiligen kontaktbehafteten elektrischen Verbindung kann allgemein zwischen einem Deckelkontakt und einem Topfkontakt auch jeweils eine kontaktlose elektrische Verbindung vorgesehen sein.

Der erste Deckelkontakt kann als ein erstes Deckelflächenelement (z.B. durch eine Folie aus einem elektrisch leitfähigen Material, beispielsweise eine Metallfolie) und der zweite Deckelkontakt kann als ein zweites Deckelflächenelement (z.B. durch eine Folie aus einem elektrisch leitfähigen Material, beispielsweise eine Metallfolie) gebildet sein.

Der erste obere Topfkontakt kann als ein erstes Topfflächenelement (z.B. durch eine Folie aus einem elektrisch leitfähigen Material, beispielsweise eine Metallfolie) und der zweite obere Topfkontakt (z.B. durch eine Folie aus einem elektrisch leitfähigen Material, beispielsweise eine Metallfolie) kann als ein zweites Topfflächenelement gebildet sein.

In einer verriegelten Position des Deckels können das erste Deckelflächenelement und das erste Topfflächenelement einen ersten Koppelkondensator bilden. Das zweite Deckelflächenelement und das zweite Topfflächenelement können einen zweiten Koppelkondensator bilden.

Insbesondere bilden die genannten Flächenelemente nur in der verriegelten Position des Deckels einen jeweiligen Koppelkondensator. Mit anderen Worten kann nur in der verriegelten Position das durch die Lesesteuerung bereitgestellte Antennensignal an die Leseantenne (z.B. eine (schematisch angedeutete) Antennenspule) über die genannten Koppelkondensatoren übertragen werden.

Das Dielektrikum des jeweiligen Koppelkondensators wird insbesondere durch Luft und/oder den verwendeten Kunststoff bestimmt.

Schließlich sei angemerkt, dass mit dem Bezugszeichen 450 die Vertikalachse des Zubehörteils 400 bezeichnet ist, mit dem Bezugszeichen 452 die Längsachse des Zubehörteils 400 und mit dem Bezugszeichen 454 die Querachse des Zubehörteils 400.

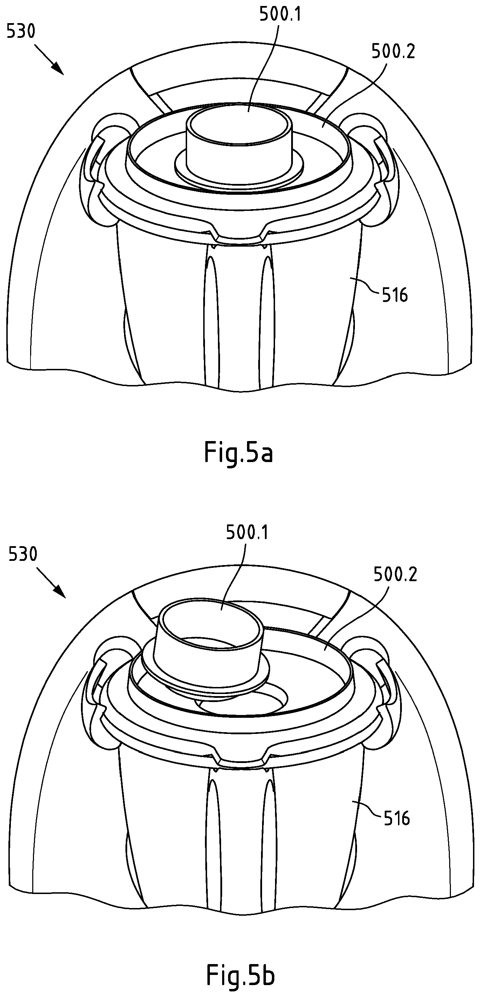

Die Figur 5a zeigt eine schematische Ansicht eines Ausführungsbeispiels eines Zubehörteils 500.1 gemäß der vorliegenden Anmeldung in einer Betriebsposition und die Figur 5b (im Vergleich zur Figur 5a) eine schematische Ansicht eines Ausführungsbeispiels des Zubehörteils 500.1 in einer Nicht-Betriebsposition. Zur Vermeidung von Wiederholungen werden nachfolgend im Wesentlichen nur die Unterschiede zu den vorherigen Ausführungsbeispielen beschrieben und ansonsten auf die vorherigen Ausführungen verwiesen. Insbesondere wurde zu Gunsten einer besseren Übersicht auf die Darstellung von Details (z.B. Transponderanordnung) verzichtet.

Wie der Figur 5a zu entnehmen ist, ist das Zubehörteil 500.1 mit dem Küchengerät 530 betriebsbereit verknüpft. Vorliegend ist das Zubehörteil 500.1 mit dem Deckel 500.2 des Küchengeräts 530 gekoppelt bzw. verbunden. Mit anderen Worten, das Zubehörteil 500.1 befindet sich in der Betriebsposition.

Topf 516 und Deckel 500.2 können beispielsweise entsprechend Topf und Deckel der Figur 4 gebildet sein.

In diesem Fall wird das Auswertemodul einer Leseanordnung feststellen, dass beispielsweise der erfasste Neigungswinkel in Bezug zur Erdbeschleunigung des Zubehörteils 500.1 das Betriebspositionskriterium erfüllt. Beispielsweise kann das Betriebspositionskriterium ein erfasster Neigungswinkel in Bezug zur Erdbeschleunigung des Küchengeräts 530 sein (bzw. ein Toleranzbereich um diesen Neigungswinkel herum). Das Betriebspositionskriterium ist insbesondere dann erfüllt, wenn der Neigungswinkel in Bezug zur Erdbeschleunigung des Zubehörteils 500.1 im Wesentlichen dem Neigungswinkel in Bezug zur Erdbeschleunigung des Küchengeräts 500.1 entspricht, also insbesondere in dem Winkelbereich bzw. Toleranzbereich liegt. Das heißt insbesondere, dass der Neigungswinkel zwischen den beiden Sensoren (in einem Toleranzbereich) gleich Null wird.

Zusätzlich kann ein Zubehörtypkriterium und ggf. Kalibrierungsinformationen berücksichtigt werden. Insbesondere kann zumindest einer der Neigungswinkel mittels des Zubehörtypkriteriums und/oder Kalibrierungsinformationen korrigiert bzw. angepasst werden.

Insbesondere kann daher durch das Auswertemodul ein Bestimmen der Betriebsposition des Zubehörteils 500.1 erfolgen, basierend auf dem ausgelesenen Zubehörlageparameter und einem Betriebspositionskriterium.

Wie der Figur 5b zu entnehmen ist, ist das Zubehörteil 500.1 an dem Küchengerät 530 nicht ordnungsgemäß bzw. betriebsfähig positioniert. Vielmehr liegt das Zubehörteil 500.1 im Randbereich des Deckels 500.2 und damit aufgrund der vorgenommen konstruktiven und/oder strukturellen Maßnahmen an dem Zubehörteil 500.1 und/oder dem weiteren Zubehörteil 500.2 schräg auf. Das Zubehörteil 500.1 ist also mit dem Deckel 500.2 des Küchengeräts 530 nicht gekoppelt bzw. nicht korrekt positioniert. Mit anderen Worten, das Zubehörteil 500.1 befindet sich in einer Nicht-Betriebsposition. Ein ordnungsgemäßer Betrieb ist insbesondere nicht möglich in dieser Position.

In diesem Fall wird das Auswertemodul einer Leseanordnung feststellen, dass beispielsweise der erfasste Neigungswinkel in Bezug zur Erdbeschleunigung des Zubehörteils 500.1 das Betriebspositionskriterium nicht erfüllt. Beispielsweise kann das Betriebspositionskriterium ein erfasster Neigungswinkel in Bezug zur Erdbeschleunigung des Küchengeräts 530 sein (bzw. ein Toleranzbereich um diesen Neigungswinkel herum).

Das Betriebspositionskriterium ist insbesondere dann nicht erfüllt, wenn der Neigungswinkel in Bezug zur Erdbeschleunigung des Zubehörteils 500.1 nicht im Wesentlichen dem Neigungswinkel in Bezug zur Erdbeschleunigung des Küchengeräts 500.1 entspricht, also insbesondere außerhalb des Winkelbereichs bzw. Toleranzbereichs liegt.

Zusätzlich kann ein Zubehörtypkriterium und ggf. Kalibrierungsinformationen berücksichtigt werden. Insbesondere kann zumindest einer der Neigungswinkel mittels des Zubehörtypkriteriums und/oder Kalibrierungsinformationen korrigiert bzw. angepasst werden.

Insbesondere kann daher durch das Auswertemodul ein Bestimmen der Nicht-Betriebsposition des Zubehörteils 500.1 erfolgen, basierend auf dem ausgelesenen Zubehörlageparameter und einem Betriebspositionskriterium.

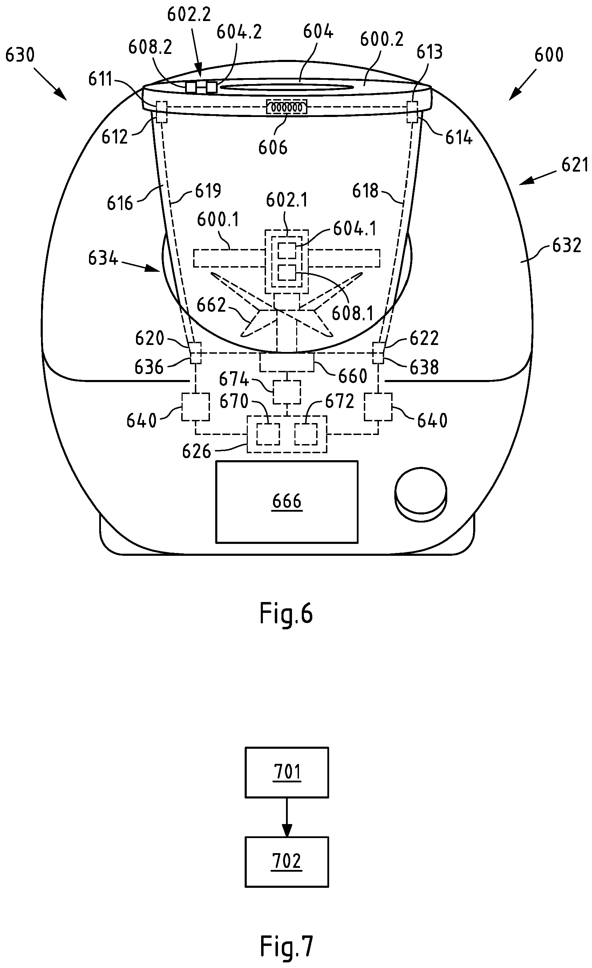

Die Figur 6 zeigt eine schematische Ansicht eines weiteren Ausführungsbeispiels eines Küchengeräts 630 gemäß der vorliegenden Anmeldung. Zur Vermeidung von Wiederholungen werden nachfolgend im Wesentlichen nur die Unterschiede zu den vorherigen Ausführungsbeispielen beschrieben und ansonsten auf die vorherigen Ausführungen verwiesen.

Wie zu erkennen ist, weist die Gerätebasis 632 einen Werkzeugantrieb 660 auf. Der Werkzeugantrieb 660 ist zum Antreiben bzw. Betreiben eines (Zubehörteils in Form) eines Küchengerätewerkzeugs 662 eingerichtet, welches sich insbesondere in dem Topf 616 befinden kann. Beispielhaft ist als Küchengerätewerkzeug 662 ein Schneidwerkzeug 662 dargestellt. Weiter kann die Küchenbasis eine Steuereinrichtung umfassen, die die eine Heizung, die im Topf 602 integriert ist, ansteuert und überwacht.

An bzw. auf dem Küchengerätewerkzeug 662 ist vorliegend ein Zubehörteil 600.1 in Form eines Rühraufsatzes 600.1 positioniert. Wie dargestellt ist, ist das Zubehörteil 600.1 korrekt positioniert bzw. vorliegend mit dem Küchengerätewerkzeug 662 (und damit mit dem Küchengerät 630) gekoppelt. Insbesondere ist das dargestellte Zubehörteil 600.1 in einer Betriebsposition.

Wie zu erkennen ist, umfasst das Küchengerät 630 ein weiteres Zubehörteil 600.2 in Form eines Deckels 600.2. Topf 616 und Deckel 600.2 können beispielsweise entsprechend Topf und Deckel der Figur 4a und 4b gebildet sein.

Die Lesesteuerung 626 umfasst vorliegend insbesondere ein Auswertemodul 670 und einen Küchengerätlagesensor 672. Das Auswertemodul 670 ist insbesondere eingerichtet zum Detektieren bzw. Bestimmen der Betriebsposition bzw. eines Betriebszustands der Zubehörteile 600.1, 600.2, basierend auf den jeweils aus den Transponderanordnungen 602.1, 602.2 ausgelesenen Daten (zumindest der jeweiligen augenblicklich erfassten Zubehörlageparameter).

Beispielsweise kann der Deckel 600.2 durch einen Nutzer in die verriegelte Position bewegt werden. Sobald der Deckel 600.2 in der verriegelten Position ist, werden eine elektrische Verbindung zwischen dem ersten Deckelkontakt 611 und dem ersten oberen Topfkontakt 612 und eine elektrische Verbindung zwischen dem zweiten Deckelkontakt 613 und dem zweiten oberen Topfkontakt 614 hergestellt. Über die hergestellten Verbindungen wird ein Antennensignal durch die Lesesteuerung 626 an die Leseantenne 606 angelegt, so dass insbesondere ein Lesefeld generiert und ausgesendet wird.

Die in Reichweite angeordneten Transponder 604.1, 604.2 empfangen das Lesefeld und extrahieren insbesondere die darin enthaltenen Instruktionen. Basierend auf den Instruktionen generiert der jeweilige Transponder 604.1, 604.2 eine Antwort. Beispielsweise gibt der jeweilige Transponder 604.1, 604.2 die jeweiligen augenblicklich erfassten Zubehörlageparameter und optional die jeweils gespeicherten Daten aus, wie eine Zubehörkennung und/oder eine Herkunftsinformation und/oder eine Zubehörtypkennung und/oder eine Kalibrierungsinformation des jeweiligen Zubehörlagesensors 608.1, 608.2. Insbesondere beeinflusst der jeweilige Transponder 604.1, 604.2 das Lesefeld entsprechend. Dies kann durch die Lesesteuerung 626 erfasst werden, so dass die genannten Daten ausgelesen werden.

In vorbeschriebener Weise kann eine Betriebsposition oder eine Nicht-Betriebsposition der Zubehörteile 600.1, 600.2 bestimmt werden.

Ferner umfasst vorliegend die Gerätebasis 632 ein Freigabemodul 674. Das Freigabemodul 674 ist insbesondere eingerichtet zum Freigeben mindestens einer Gerätefunktion insbesondere abhängig von dem Zubehörtyp des mindestens einen (ordnungsgemäß) an der Gerätebasis 632 und/oder einem weiteren Zubehörteil positionierten Zubehörteils 600.1, 600.2. Das Freigabemodul 674 kann insbesondere mit dem Auswertemodul 670 kommunikativ verbunden sein. Wenn kein ordnungsgemäß positioniertes Zubehörteil detektiert wird, kann die mindestens eine Gerätefunktion gesperrt bleiben.

Vorzugsweise kann das Auswertemodul 670 zusätzlich eingerichtet sein zum Bestimmen des Zubehörtyps, basierend auf den ausgelesenen Daten, insbesondere der Zubehörtypkennung und einem gespeicherten Zubehörtypkriterium. Vorzugsweise kann das Zubehörtypkriterium eine zuvor beschriebene Zuordnungstabelle sein. Insbesondere kann in der Zuordnungstabelle zusätzlich für jeden Zubehörtyp die mindestens eine bei diesem Zubehörtyp zulässige Gerätefunktion gespeichert sein.

Beispielhafte und nicht abschließende Küchengerätefunktionen bzw. Gerätefunktion sind eine erste Schneidfunktion mit einer ersten maximal zulässigen Solldrehzahl und/oder Solldrehmoment, eine weitere Schneidfunktion mit einer zweiten (sich von der ersten maximal zulässigen Solldrehzahl und/oder Solldrehmoment unterscheidenden) maximal zulässigen Solldrehzahl und/oder Solldrehmoment, eine erste Rührfunkton mit einer ersten maximal zulässigen Solldrehzahl und/oder Solldrehmoment, eine weitere Rührfunkton mit einer zweiten (sich von der ersten maximal zulässigen Solldrehzahl und/oder Solldrehmoment unterscheidenden) maximal zulässigen Solldrehzahl und/oder Solldrehmoment, eine erste Motordrehrichtung, eine zweite entgegengesetzte Motordrehrichtung, eine erste Solltemperatur (bzw. Heizleistung) und/oder ein erster Solltemperaturbereich (bzw. Heizleistungsbereich) einer in dem Speiseaufnahmeelement integrierten Heizung, eine zweite (sich von der ersten Solltemperatur unterscheidenden) Solltemperatur und/oder ein zweiter (sich von dem ersten Solltemperaturbereich unterscheidenden) Solltemperaturbereich einer in dem Speiseaufnahmeelement integrierten Heizung, Steuerprogramme und/oder Steuerprogrammsollparameter für bestimmte Operationen etc.

Insbesondere kann nach einem Bestimmen des Zubehörtyps des mindestens einen angeordneten Zubehörteils 600.1, 600.2 die mindestens eine für diesen Zubehörtyp zulässige Gerätefunktion durch das Freigabemodul 674 freigegeben werden. Der Zubehörtyp und optional die zulässige Gerätefunktion kann insbesondere durch Vergleichen der ausgelesenen Zubehörtypkennung mit den in der Zuordnungstabelle gespeicherten Zubehörtypkennungen bestimmt werden.

Wenn die zulässige Gerätefunktion einen maximal zulässigen Antriebssollparameterwert umfasst, kann ein Freigeben einer Gerätefunktion, insbesondere ein Beschränken, beispielsweise durch das Freigabemodul 674, des Betreibens des Werkzeugantriebs 660 auf den für diesen Zubehörtyp gespeicherten Antriebssollparameterwert (z.B. eine maximal zulässige Solldrehzahl und/oder ein maximal zulässiges Drehmoment) umfassen.

Optional kann das Küchengerät 630 über eine (optische) Anzeige 666 verfügen, beispielsweise ein Display. Die Anzeige 666 kann eingerichtet sein zum Anzeigen des identifizierten Zubehörtyps. Optional kann eine Fehlermeldung (beispielweise wenn eine Betriebsposition bzw. ein Kopplungszustand detektiert wurde, jedoch kein Zubehörtyp bestimmt werden konnte, oder wenn eine Nicht-Betriebsposition bzw. ein Nicht-Kopplungszustand detektiert wurde) und/oder eine Hinweismeldung (z.B. eine Aufforderung zur Reinigung) angezeigt werden.

Die Funktionsweise eines Küchengeräts, wie das Küchengerät 630, wird nachfolgend näher mit Hilfe der Figur 7 beschrieben. Die Figur 7 zeigt ein Diagramm eines Ausführungsbeispiels eines Verfahrens gemäß der vorliegenden Anmeldung. Das Verfahren wird verwendet zum Detektieren bzw. Bestimmen der Betriebsposition eines Zubehörteils.

In einem Schritt 701 erfolgt ein Auslesen, durch eine Leseanordnung des Küchengeräts, des durch den Zubehörlagesensor erfassten Zubehörlageparameters des Zubehörteils, wie bereits beschrieben wurde.

In einem weiteren Schritt 702 erfolgt ein Bestimmen, durch ein Auswertemodul der Leseanordnung, einer Betriebsposition des Zubehörteils, basierend auf dem ausgelesenen Zubehörlageparameter und einem Betriebspositionskriterium.

### Bezugszeichenliste

- 100, 200, 400, 500, 600: Zubehörteil
- 101: Speicher
- 102, 202, 402, 602: Transponderanordnung
- 403: Topfrand
- 104, 204, 404, 604: Transponder
- 405: Deckelrand
- 106, 206, 306, 406, 606: Leseantenne
- 108, 208, 408, 608: Zubehörlagesensor
- 409: Windung
- 411, 611: erster Deckelkontakt
- 412, 612: erster oberer Topfkontakt
- 413, 613: zweiter Deckelkontakt
- 614: zweiter oberer Topfkontakt
- 216, 416, 516, 616: Topf
- 418, 618: erste Topfverbindung
- 619: zweite Topfverbindung
- 220, 420, 620: erster unterer Topfkontakt
- 221, 321, 421, 621: Leseanordnung
- 622: zweiter unterer Topfkontakt
- 425: Antennenspule
- 226, 326, 626: Lesesteuerung
- 230, 330, 530, 630: Küchengerät
- 232, 332, 632: Gerätebasis
- 234, 634: Topfaufnahme
- 236, 636: erster Basiskontakt
- 238, 638: zweiter Basiskontakt
- 240, 640: Filter- und Anpassungsnetzwerk
- 442: Topfabschnitt
- 443: ringförmiger Teilabschnitt des Topfabschnitts
- 444: Hinterfütterung
- 450: Vertikalachse
- 452: Längsachse
- 454: Querachse
- 660: Werkzeugantrieb
- 662: Küchengerätwerkzeug
- 666: Anzeige
- 370,670: Auswertemodul
- 372, 672: Küchengerätlagesensor
- 674: Freigabemodul

## Patentansprüche

1. Küchengerät (230, 330, 530, 630), umfassend:
- mindestens ein Zubehörteil (100, 200, 400, 500, 600),wobei das Zubehörteil (100, 200, 400, 500, 600) umfasst:
- mindestens eine Transponderanordnung (102, 202, 402, 602),
- wobei die Transponderanordnung (102, 202, 402, 602) einen Transponder (104, 204, 404, 604) und einen mit dem Transponder (104, 204, 404, 604) verbundenen Zubehörlagesensor (108, 208, 408, 608) umfasst,
- wobei der Zubehörlagesensor (108, 208, 408, 608) eingerichtet ist zum Erfassen mindestens eines Zubehörlageparameters des Zubehörteils (100, 200, 400, 500, 600),
- wobei die Transponderanordnung (102, 202, 402, 602) eingerichtet ist zum Übertragen des erfassten Zubehörlageparameters an die Leseanordnung (221, 321, 421, 621),
- eine Leseanordnung (221, 321, 421, 621), umfassend eine Lesesteuerung (226, 326, 626) und mindestens eine mit der Lesesteuerung (226, 326, 626) verbindbare Leseantenne (106, 206, 306, 406, 606),
- wobei die Lesesteuerung (226, 326, 626) ein Auswertemodul (370, 670) umfasst, eingerichtet zum Bestimmen einer Betriebsposition des Zubehörteils (100, 200, 400, 500, 600), basierend auf dem ausgelesenen Zubehörlageparameter und einem Betriebspositionskriterium,
**dadurch gekennzeichnet, dass**
- das Küchengerät (230, 330, 530, 630) mindestens einen Küchengerätlagesensor (372, 672) umfasst, eingerichtet zum Erfassen eines Küchengerätlageparameters,
- wobei das Betriebspositionskriterium auf dem erfassten Küchengerätlageparameter basiert.

2. Küchengerät (230, 330, 530, 630) nach Anspruch 1, **dadurch gekennzeichnet, dass** das Küchengerät (230, 330, 530, 630) ferner umfasst:
- eine Gerätebasis (232, 332, 632), und
- mindestens eine Gefäßanordnung,
- wobei die Gerätebasis (232, 332, 632) und/oder die Gefäßanordnung die Leseanordnung (221, 321, 421, 621) umfasst, und
- die Leseanordnung (221, 321, 421, 621) eingerichtet ist zumindest zum Auslesen des Zubehörlageparameters aus der Transponderanordnung (102, 202, 402, 602).

3. Küchengerät (230, 330, 530, 630) nach Anspruch 1 oder 2, **dadurch gekennzeichnet, dass**
- die Lesesteuerung (226, 326, 626) eingerichtet ist zum Beaufschlagen der Leseantenne (106, 206, 306, 406, 606) mit einem Antennensignal, so dass ein Lesefeld durch die Leseantenne (106, 206, 306, 406, 606) ausgesendet wird.

4. Küchengerät (230, 330, 530, 630) nach einem der vorherigen Ansprüche, **dadurch gekennzeichnet, dass**
- das Auswertemodul (370, 670) eingerichtet ist zum Vergleichen des Zubehörlageparameters mit dem Küchengerätlageparameter, und
- das Auswertemodul (370, 670) eingerichtet ist zum Bestimmen der Betriebsposition des Zubehörteils, basierend auf dem Vergleichsergebnis.

5. Küchengerät (230, 330, 530, 630) nach einem der vorherigen Ansprüche, **dadurch gekennzeichnet, dass**
- die Leseanordnung (221, 321, 421, 621) eingerichtet ist zumindest zum Auslesen der Zubehörkennung und/oder der Zubehörtypkennung aus der Transponderanordnung (102, 202, 402, 602), und
- das Auswertemodul (370, 670) ist eingerichtet zum Bestimmen der Betriebsposition des Zubehörteils (100, 200, 400, 500, 600), basierend auf der Zubehörkennung und/oder der Zubehörtypkennung.

6. Küchengerät (230, 330, 530, 630) nach einem der vorherigen Ansprüche, **dadurch gekennzeichnet, dass**
- der Transponder (104, 204, 404, 604) ein RFID Transponder (104, 204, 404, 604) ist.

7. Küchengerät (230, 330, 530, 630) nach einem der vorherigen Ansprüche, **dadurch gekennzeichnet, dass**
- der Transponder (104, 204, 404, 604) ein passiver Transponder (104, 204, 404, 604) ist.

8. Küchengerät (230, 330, 530, 630) nach einem der vorherigen Ansprüche, **dadurch gekennzeichnet, dass**
- der Transponder (104, 204, 404, 604) eingerichtet ist zum Versorgen des Zubehörlagesensors (108, 208, 408, 608) mit elektrischer Energie, basierend auf einem empfangenen Lesefeld der Leseantenne (106, 206, 306, 406, 606).

9. Küchengerät (230, 330, 530, 630) nach einem der vorherigen Ansprüche, **dadurch gekennzeichnet, dass**
- der Transponder (104, 204, 404, 604) mindestens einen auslesbaren Speicher umfasst,
- wobei in dem Speicher zumindest eine Zubehörkennung und/oder eine Zubehörtypkennung gespeichert ist/sind.

10. Küchengerät (230, 330, 530, 630) nach einem der vorherigen Ansprüche, **dadurch gekennzeichnet, dass**
- der Transponder (104, 204, 404, 604) mindestens einen auslesbaren Speicher umfasst,
- wobei in dem Speicher (101) zumindest eine Kalibrierungsinformation des Zubehörlagesensors (108, 208, 408, 608) gespeichert ist.

11. Küchengerät (230, 330, 530, 630) nach einem der vorherigen Ansprüche, **dadurch gekennzeichnet, dass**
- der Zubehörlagesensor (108, 208, 408, 608) ein Beschleunigungssensor ist, und/oder
- der Zubehörlageparameter ein Neigungswinkel des Zubehörteils (100, 200, 400, 500, 600) in Bezug zur Erdbeschleunigung ist.

12. Küchengerät (230, 330, 530, 630) nach einem der vorherigen Ansprüche, **dadurch gekennzeichnet, dass**
- das Zubehörteil ein Zubehörteil ist aus der Gruppe, umfassend
- Messerabdeckung,
- Rühraufsatz,
- Deckel,
- Deckel mit Zusatzfunktion,
- Topf,
- Messbecher,
- Garkörbchen, und/oder
- Varoma.

13. Verfahren zum Bestimmen der Betriebsposition eines Zubehörteils (100, 200, 400, 500, 600) des Küchengeräts (230, 330, 530, 630) nach einem der vorherigen Ansprüche, umfassend:
- Auslesen, durch eine Leseanordnung (221, 321, 421, 621) eines Küchengeräts (230, 330, 530, 630), des durch den Zubehörlagesensor (108, 208, 408, 608) erfassten Zubehörlageparameters des Zubehörteils (100, 200, 400, 500, 600), und
- Bestimmen, durch ein Auswertemodul (370, 670) der Leseanordnung (221, 321, 421, 621), einer Betriebsposition des Zubehörteils (100, 200, 400, 500, 600), basierend auf dem ausgelesenen Zubehörlageparameter und einem Betriebspositionskriterium.

## Claims

1. A kitchen appliance (230, 330, 530, 630), comprising:
- at least one accessory (100, 200, 400, 500, 600) , wherein the accessory (100, 200, 400, 500, 600) comprises:
- at least one transponder arrangement (102, 202, 402, 602),
- wherein the transponder arrangement (102, 202, 402, 602) comprises a transponder (104, 204, 404, 604) and an accessory position sensor (108, 208, 408, 608) connected to the transponder (104, 204, 404, 604),
- wherein the accessory position sensor (108, 208, 408, 608) is configured to detect at least one accessory position parameter of the accessory (100, 200, 400, 500, 600), and
- wherein the transponder arrangement (102, 202, 402, 602) is configured to transmit the detected accessory position parameter to the reading arrangement (221, 321, 421, 621),
- a reading arrangement (221, 321, 421, 621) comprising a reading controller (226, 326, 626) and at least one reading antenna (106, 206, 306, 406, 606) connectable to the reading controller (226, 326, 626),
- wherein the reading controller (226, 326, 626) comprises an evaluation module (370, 670) configured to determine an operating position of the accessory (100, 200, 400, 500, 600) based on the read accessory position parameter and an operating position criterion.,
**characterized in that**
- the kitchen appliance (230, 330, 530, 630) comprises at least one kitchen appliance position sensor (372, 672) configured to detect a kitchen appliance position parameter,
- where the operating position criterion is based on the detected kitchen appliance position parameter.

2. The kitchen appliance (230, 330, 530, 630) of claim 1, **characterized in that** the kitchen appliance (230, 330, 530, 630) further comprises:
- an appliance base (232, 332, 632), and
- at least one container arrangement,
- wherein the appliance base (232, 332, 632) and/or the container arrangement comprises the reading arrangement (221, 321, 421, 621), and
- the reading arrangement (221, 321, 421, 621) is configured to at least read the accessory position parameter from the transponder arrangement (102, 202, 402, 602).

3. The kitchen appliance (230, 330, 530, 630) according to claim 1 or 2, **characterized in that**
- the reading controller (226, 326, 626) is configured to apply an antenna signal to the reading antenna (106, 206, 306, 406, 606) so that a reading field is transmitted by the reading antenna (106, 206, 306, 406, 606).

4. The kitchen appliance (230, 330, 530, 630) according to any one of the preceding claim, **characterized in that**
- the evaluation module (370, 670) is configured to compare the accessory position parameter with the kitchen appliance position parameter, and
- the evaluation module (370, 670) is configured to determine the operating position of the accessory based on the comparison result.

5. The kitchen appliance (230, 330, 530, 630) according to any one of the preceding claims, **characterized in that**
- the reading arrangement (221, 321, 421, 621) is configured at least to read the accessory identifier and/or the accessory type identifier from the transponder arrangement (102, 202, 402, 602), and
- the evaluation module (370, 670) is configured to determine the operating position of the accessory (100, 200, 400, 500, 600) based on the accessory identifier and/or the accessory type identifier.

6. The kitchen appliance (230, 330, 530, 630) according to any one of the preceding claims, **characterized in that**
- the transponder (104, 204, 404, 604) is an RFID transponder (104, 204, 404, 604).

7. The kitchen appliance (230, 330, 530, 630) according to any one of the preceding claims,, **characterized in that**
- the transponder (104, 204, 404, 604) is a passive transponder (104, 204, 404, 604).

8. The kitchen appliance (230, 330, 530, 630) according to any one of the preceding claims, **characterized in that**
- the transponder (104, 204, 404, 604) is configured to provide electrical power to the accessory position sensor (108, 208, 408, 608) based on a received reading field of the reading antenna (106, 206, 306, 406, 606).

9. The kitchen appliance (230, 330, 530, 630) according to any one of the preceding claims,, **characterized in that**
- the transponder (104, 204, 404, 604) comprises at least one readable memory,
- wherein at least one accessory identifier and/or accessory type identifier is/are stored in the memory.

10. The kitchen appliance (230, 330, 530, 630) according to any one of the preceding claims, **characterized in that**
- the transponder (104, 204, 404, 604) comprises at least one readable memory,
- wherein at least one calibration information of the accessory position sensor (108, 208, 408, 608) is stored in the memory (101).

11. The kitchen appliance (230, 330, 530, 630) according to any one of the preceding claims, **characterized in that**
- the accessory position sensor (108, 208, 408, 608) is an acceleration sensor, and/or
- the accessory position parameter is an angle of inclination of the accessory (100, 200, 400, 500, 600) with respect to the acceleration due to gravity.

12. Kitchen appliance (230, 330, 530, 630) according to one of the previous claims, **characterized in that**
- the accessory is an accessory from the group comprising:
- knife cover,
- stirring attachment,
- lid,
- lid with additional function, e.g. cutting device for vegetables
- pot,
- measuring cup,
- cooking basket, and / or
- varoma.

13. A method of determining the operating position of an accessory (100, 200, 400, 500, 600) of the kitchen appliance (230, 330, 530, 630) according to any one of the preceding claims, comprising:
- reading, by a reading arrangement (221, 321, 421, 621) of a kitchen appliance (230, 330, 530, 630), the accessory position parameter of the accessory (100, 200, 400, 500, 600) detected by the accessory position sensor (108, 208, 408, 608), and
- determining, by an evaluation module (370, 670) of the reading arrangement (221, 321, 421, 621), an operating position of the accessory (100, 200, 400, 500, 600) based on the read accessory position parameter and an operating position criterion.

## Revendications

1. Appareil de cuisine (230, 330, 530, 630), comprenant :
- au moins un accessoire (100, 200, 400, 500, 600), où l'accessoire (100, 200, 400, 500, 600) comprend :
- au moins un arrangement de transpondeur (102, 202, 402, 602),
- l'arrangement de transpondeur (102, 202, 402, 602) comprenant un transpondeur (104, 204, 404, 604) et un capteur de position d'accessoire (108, 208, 408, 608) connecté au transpondeur (104, 204, 404, 604),
- le capteur de position d'accessoire (108, 208, 408, 608) étant configuré pour détecter au moins un paramètre de position d'accessoire de l'accessoire (100, 200, 400, 500, 600),
- l'arrangement de transpondeur (102, 202, 402, 602) étant configuré pour transmettre le paramètre de position d'accessoire détecté à l'arrangement de lecture (221, 321, 421, 621)
- un arrangement de lecture (221, 321, 421, 621) comprenant une commande de lecture (226, 326, 626) et au moins une antenne de lecture (106, 206, 306, 406, 606) pouvant être reliée à la commande de lecture (226, 326, 626),
- la commande de lecture (226, 326, 626) comprenant un module d'évaluation (370, 670) configuré pour déterminer une position de fonctionnement de l'accessoire (100, 200, 400, 500, 600) sur la base du paramètre de position d'accessoire lu et d'un critère de position de fonctionnement,
**caractérisé en ce que**
- l'appareil de cuisine (230, 330, 530, 630) comprend au moins un capteur de position d'appareil de cuisine (372, 672) configuré pour détecter un paramètre de position d'appareil de cuisine,
- le critère de position de fonctionnement étant basé sur le paramètre de position d'appareil de cuisine détecté.

2. Appareil de cuisine (230, 330, 530, 630) selon la revendication 1, **caractérisé en ce que** l'appareil de cuisine (230, 330, 530, 630) comprend en outre :
- une base d'appareil (232, 332, 632), et
- au moins un arrangement de récipients,
- la base de l'appareil (232, 332, 632) et/ou l'arrangement de récipient comprenant l'arrangement de lecture (221, 321, 421, 621), et
- l'arrangement de lecture (221, 321, 421, 621) étant configuré au moins pour lire le paramètre de position d'accessoire à partir de l'arrangement de transpondeur (102, 202, 402, 602).

3. Appareil de cuisine (230, 330, 530, 630) selon la revendication 1 ou 2, **caractérisé en ce**
- la commande de lecture (226, 326, 626) est configurée pour appliquer un signal d'antenne à l'antenne de lecture (106, 206, 306, 406, 606), de sorte qu'un champ de lecture est émis par l'antenne de lecture (106, 206, 306, 406, 606).

4. Appareil de cuisine (230, 330, 530, 630) selon l'une quelconque des revendications précédentes, **caractérisé en ce**
- le module d'évaluation (370, 670) est configuré pour comparer le paramètre de position d'accessoire avec le paramètre de position d'appareil de cuisine, et
- le module d'évaluation (370, 670) est configuré pour déterminer la position de fonctionnement de l'accessoire, sur la base du résultat de la comparaison.

5. Appareil de cuisine (230, 330, 530, 630) selon l'une quelconque des revendications précédentes, **caractérisé en ce que**
- l'arrangement de lecture (221, 321, 421, 621) est configuré au moins pour lire l'identification d'accessoire et/ou l'identification de type d'accessoire à partir de l'arrangement de transpondeur (102, 202, 402, 602), et
- le module d'évaluation (370, 670) est configuré pour déterminer la position de fonctionnement de l'accessoire (100, 200, 400, 500, 600), sur la base de l'identification d'accessoire et/ou de l'identification de type d'accessoire.

6. Appareil de cuisine (230, 330, 530, 630) selon l'une des revendications précédentes, **caractérisé en ce**
- le transpondeur (104, 204, 404, 604) est un transpondeur RFID (104, 204, 404, 604).

7. Appareil de cuisine (230, 330, 530, 630) selon l'une des revendications précédentes, **caractérisé en ce**
- le transpondeur (104, 204, 404, 604) est un transpondeur passif (104, 204, 404, 604).

8. Appareil de cuisine (230, 330, 530, 630) selon l'une des revendications précédentes, **caractérisé en ce que**
- le transpondeur (104, 204, 404, 604) est configuré pour alimenter le capteur de position d'accessoire (108, 208, 408, 608) en énergie électrique sur la base d'un champ de lecture de l'antenne de lecture (106, 206, 306, 406, 606) reçu.

9. Appareil de cuisine (230, 330, 530, 630) selon l'une des revendications précédentes, **caractérisé en ce que**
- le transpondeur (104, 204, 404, 604) comprend au moins une mémoire lisible,
- au moins une identification d'accessoire et/ou une identification de type d'accessoire étant stockée(s) dans la mémoire.

10. Appareil de cuisine (230, 330, 530, 630) selon l'une des revendications précédentes, **caractérisé en ce que**
- le transpondeur (104, 204, 404, 604) comprend au moins une mémoire lisible,
- au moins une information de calibrage du capteur de position d'accessoire (108, 208, 408, 608) étant stockée dans la mémoire (101).

11. Appareil de cuisine (230, 330, 530, 630) selon l'une des revendications précédentes, **caractérisé en ce que**
- le capteur de position d'accessoire (108, 208, 408, 608) est un capteur d'accélération,
et/ou
- le paramètre de position d'accessoire est un angle d'inclinaison de l'accessoire (100, 200, 400, 500, 600) par rapport à l'accélération de la pesanteur.

12. Appareil de cuisine (230, 330, 530, 630) selon l'une quelconque des revendications précédentes, **caractérisé en ce que**
- l'accessoire est un accessoire du groupe comprenant:
- capot de lame,
- embout mélangeur,
- couvercle,
- couvercle avec fonction supplémentaire,
- récipient,
- gobelet gradué,
- corbeille de cuisson, et/ou
- Varoma.

13. Procédé pour déterminer la position de fonctionnement d'un accessoire (100, 200, 400, 500, 600) de l'appareil de cuisine (230, 330, 530, 630) selon l'une des revendications précédentes, comprenant:
- lire, par un arrangement de lecture (221, 321, 421, 621) d'un appareil de cuisine (230, 330, 530, 630), le paramètre de position d'accessoire de l'accessoire (100, 200, 400, 500, 600) détecté par le capteur de position d'accessoire (108, 208, 408, 608), et
- déterminer, par un module d'évaluation (370, 670) de l'arrangement de lecture (221, 321, 421, 621), une position de fonctionnement de l'accessoire (100, 200, 400, 500, 600) sur la base du paramètre de position d'accessoire lu et d'un critère de position de fonctionnement.
